# EUROPÄISCHE PATENTSCHRIFT

(11) **EP 2 900 390 B1**
(45) Veröffentlichungstag und Bekanntmachung des Hinweises auf die Patenterteilung: **15.07.2020**
(21) Anmeldenummer: 13756845.7
(22) Anmeldetag: 22.08.2013
(51) Int. Cl.: B05C 5/02, G01F 11/36, B05B 1/02, B05B 17/06, G01F 11/02, B65D 25/42

(54) **DOSIERSYSTEM, DOSIERVERFAHREN UND HERSTELLUNGSVERFAHREN**
DOSING SYSTEM, DOSING METHOD AND PRODUCTION METHOD
SYSTÈME DE DOSAGE, PROCÉDÉ DE DOSAGE ET PROCÉDÉ DE FABRICATION

(30) Priorität: 27.09.2012 DE 102012109123
(43) Veröffentlichungstag der Anmeldung: 05.08.2015
(73) Patentinhaber: Vermes Microdispensing GmbH, 83624 Otterfing (DE)
(72) Erfinder: STÄDTLER, Jürgen, 83620 Feldkirchen-Westerham (DE); FLIEß, Mario, 81549 München (DE)
(74) Vertreter: Beckord & Niedlich Patentanwälte PartG mbB
(86) Internationale Anmeldenummer: PCT/EP2013/067490
(87) Internationale Veröffentlichungsnummer: WO 2014/048643

(56) Entgegenhaltungen:
- EP-A2- 0 048 364
- WO-A1-99/64167
- CH-A2- 703 050
- GB-A- 2 451 833

## Beschreibung

Die vorliegende Erfindung betrifft ein Dosiersystem für einen flüssigen bis zähflüssigen Dosierstoff bzw. ein zu dosierendes Medium, mit einer Düse, die eine Austrittsöffnung aufweist, in deren Bereich ein Verschlusselement bewegbar angeordnet ist, das in einer Ausstoß- und/oder Rückzugsrichtung bewegt wird. Die Erfindung betrifft auch ein Dosierverfahren für einen derartigen Dosierstoff und ein Herstellungsverfahren für ein solches Dosiersystem.

Die Abgabe von flüssigen bis zähflüssigen Dosierstoffen, beispielsweise von Klebstoffen, Farben, Drucklacken, in einem Bindersystem gebundenen leitenden Substanzen wie Lötpasten, Convertermaterialien für LEDs (also meist zähflüssigen Pasten mit hohem Füllstoff-Anteil, insbesondere keramischen Füllstoffen) u.v.m. dient der gezielten Aufbringung solcher Dosierstoffe auf Zieloberflächen. Beispielsweise werden elektronische Leiterplatinen gezielt und punktgenau mit leitenden Substanzen versehen, was relativ unflexible Prozesse, etwa Maskenprozesse oder Rakelprozesse, ersetzt. Eine besondere Herausforderung besteht dabei darin, die Dosierstoffe hochgenau, das heißt zum richtigen Zeitpunkt, am richtigen Ort und in einer genau dosierten Menge auf die Zieloberfläche zu befördern. Dies kann also beispielsweise dadurch erfolgen, dass eine tröpfchenweise Abgabe über die Düse eines Dosiersystems erfolgt, wobei die Größe und/oder die Menge der Tröpfchen durch die Wirkung der Düse möglichst genau vorherbestimmt werden. Alternativ kann der Dosierstoff in einem Strahl aufgespritzt oder in einem Nebel aufgesprüht werden.

Die US-Patentschrift 6 450 416 B1 beschreibt ein Dosiersystem der eingangs genannten Art, bei dem ein piezoelektrischer Aktor mit einem Stößel verbunden ist und den Stößel in einer Ausstoß- und/oder Rückzugsrichtung bewegt. Ein derartiges System kann hochfeine und sehr schnelle Stößelbewegungen ermöglichen. Es weist jedoch den Nachteil auf, dass durch die möglichen sehr schnellen Hubbewegungen des piezoelektrischen Aktors Vibrationen im Dosiersystem provoziert werden können, die die Laufruhe erheblich mindern und das Dosiersystem stark mechanisch beanspruchen. DE 10 2010 039 165 offenbart eine Dosiervorrichtung gemäß der Präambel des Anspruchs 1. der vorliegenden Erfindung ist es, eine Verbesserung eines eingangs genannten Dosiersystems bereitzustellen. Dabei wird insbesondere ein spezielles Augenmerk darauf gelegt, dass Vibrationen und/oder die mechanische Beanspruchung des Dosiersystems und/oder einzelner seiner Komponenten reduziert werden.

Diese Aufgabe wird durch ein Dosiersystem gemäß Anspruch 1, durch ein Dosierverfahren gemäß Anspruch 13 und durch ein Herstellungsverfahren gemäß Anspruch 14 gelöst.

Erfindungsgemäß ist das Verschlusselement so mit zumindest zwei piezoelektrischen Aktoren gekoppelt, die so gegenläufig geschaltet sind, dass ein erster piezoelektrischer Aktor, wenn er im Betrieb expandiert wird, das Verschlusselement in die Rückzugsrichtung bewegt und ein zweiter piezoelektrischer Aktor, wenn er im Betrieb expandiert wird, das Verschlusselement in die Ausstoßrichtung bewegt.

Dabei kann die Kopplung des Verschlusselements unmittelbar bzw. direkt erfolgen, d. h. dass das Verschlusselement zum Beispiel direkt mit dem ersten piezoelektrischen Aktor und/oder dem zweiten piezoelektrischen Aktor verbunden ist oder, je nach konkretem Aufbau, zwischen diesen gehalten wird. Ebenso kann das Verschlusselement aber auch mittelbar bzw. indirekt mit dem ersten piezoelektrischen Aktor und/oder dem zweiten piezoelektrischen Aktor gekoppelt sein, beispielsweise über geeignete Koppel- bzw. Verbindungselemente, ein Gestänge oder einen sonstigen Mechanismus.

Durch die Erfindung kann also eine Push-Push-Anordnung realisiert werden, bei der jeweils einer der piezoelektrischen Aktoren das Verschlusselement (direkt oder indirekt) schiebt bzw. in die gewünschte Richtung drückt. D. h. während sich ein erster der Aktoren ausdehnt und das Verschlusselement in eine der beiden Richtung schiebt, zieht sich der zweite Aktor zusammen und gibt so den notwendigen Platz für die Bewegung des Verschlusselements in die gewünschte Richtung frei. Soll das Verschlusselement dann in die andere Richtung bewegt werden, werden die Funktionen der Aktoren umgedreht, d. h. der zweite Aktor dehnt sich wieder aus und schiebt nun das Verschlusselement, während sich der erste Aktor zusammenzieht und den Weg freigibt.

Da Piezoelemente zwar in der Regel auf Druck gut belastbar sind, eine Belastung auf Zug dagegen schnell zu einer Schädigung oder völligen Zerstörung der Piezoelemente führen kann, wird auf diese Weise ein besonders stabiles piezoelektrisches Aktorsystem bereitgestellt.

Dabei kann besonders bevorzugt die Dimensionierung, Anordnung und Ansteuerung der Aktoren so erfolgen, dass der sich zusammenziehende Aktor immer noch einen (geringen) Gegendruck ausübt und somit für eine gewisse Vorspannung des sich ausdehnenden piezoelektrischen Aktors sorgt, damit dieser am Ende der Bewegung nicht zu stark überschwingt und innere Spannungen vermieden bzw. minimiert werden, die zu einer Schädigung der Piezoelemente führen könnten. In diesem Fall werden also sowohl bei einer Bewegung des Verschlusselements in der Ausstoßrichtung als auch bei einer Bewegung in der Rückzugsrichtung von beiden Aktoren einander entgegen gerichtete Druckkräfte ausgeübt, wobei die aktuelle Differenz der Druckkräfte die aktuelle Bewegungsrichtung bestimmt. Dies erlaubt eine besonders schnelle Bewegung des Verschlusselements mit einer hohen Frequenz und sehr steilen Flanken.

Ein erfindungsgemäßes Dosierverfahren für einen Dosierstoff erfolgt mittels eines Dosiersystems mit einer Düse, die eine Austrittsöffnung aufweist, in deren Bereich ein Verschlusselement durch eine Expansion eines ersten piezoelektrischen Aktors in eine Rückzugsrichtung bewegt wird und durch eine Expansion eines zweiten piezoelektrischen Aktors zum Ausstoß von Dosierstoff aus der Düse in eine Ausstoßrichtung bewegt wird.

Ein erfindungsgemäßes Herstellungsverfahren für ein Dosiersystem umfasst mindestens folgende Schritte:
- Bereitstellung einer Düse, die eine Austrittsöffnung aufweist,
- bewegbare Anordnung eines Verschlusselements im Bereich der Düse,
- Kopplung des Verschlusselements mit zumindest zwei piezoelektrischen Aktoren, wobei die piezoelektrischen Aktoren so angeordnet und mit dem Verschlusselement gekoppelt werden, dass ein erster piezoelektrischer Aktor, wenn er im Betrieb expandiert wird, das Verschlusselement in die Rückzugsrichtung bewegt und ein zweiter piezoelektrischer Aktor, wenn er im Betrieb expandiert wird, das Verschlusselement in die Ausstoßrichtung bewegt.

Als Verschlusselement wird ein einstückiges oder mehrstückiges Element definiert, das bevorzugt eine längliche Form, beispielsweise eine zylindrische Form, aufweist, also beispielsweise ein Stößel, zum Beispiel hergestellt unter Verwendung von Silizium. Es kann jedoch auch ein rundes oder ovales Verschlusselement sein, das im Verschlusskanal bewegbar angeordnet bzw. gelagert ist. Das Verschlusselement kann in einem Verschlusskanal angeordnet sein, einem Hohlkörper, bevorzugt einem zylindrischen Hohlkörper, der an seiner Innenseite einen Hohlraum definiert, d.h. einschließt, innerhalb dessen das Verschlusselement mindestens bereichsweise so angeordnet ist, dass das Verschlusselement den Hohlraum im Sinne der Erfindung "verschließt". Hierbei ist jedoch zu beachten, dass die Verschlusswirkung komplex sein kann und nicht aus einem kompletten Abdichten des Hohlraums durch das Verschlusselement besteht: Bei dem erfindungsgemäßen Dosiersystem kann es sich auch um ein offenes System handeln, wie es untenstehend noch näher beschrieben wird.

Das erfindungsgemäße Dosiersystem weist wie oben ausgeführt ein Aktorsystem zur automatisierten kontrollierten Bewegung des Verschlusselements auf, wobei das Aktorsystem mindestens zwei piezoelektrische Aktoren umfasst. Piezoelektrische Aktoren haben gegenüber anderen mechanischen, elektromechanischen bzw. pneumatischen/hydraulischen Systemen grundsätzlich schon den Vorteil der sehr präzisen und schnelleren Steuerbarkeit, insbesondere einer kurzen Reaktionszeit. Außerdem benötigen sie relativ wenig Bauraum. Als piezoelektrischer Aktor wird im Zusammenhang der Erfindung ein solches Bauteil definiert, das zwar aus mehreren Elementen, beispielsweise mehreren übereinander geschichteten oder parallel nebeneinander liegenden Piezokristallen bzw. Kristallschichten oder ähnlichen Piezoelementen, ausgebildet sein kann, jedoch einen Verbund bildet, der als Gesamtheit von einer Steuereinheit angesteuert wird, das heißt, z. B. einen gemeinsamen elektrischen Anschluss zur Ansteuerung seiner enthaltenen Einzelelemente aufweist. Dabei können die Aktorelemente jeweils wie in einer Reihenschaltung wirken, d. h. dass sich beispielsweise die Ausdehnung der Piezoelementen aufaddiert, oder parallel zueinander, d. h. dass z. B. die Aktorelemente so nebeneinander geschaltet sind, dass sich beispielsweise die wirksame Druckfläche erhöht. Auch bei mehreren parallelen Aktorelementen können diese jeweils wiederum als Stapel von in Reihe geschalteten Piezoelementen (sogenannte Piezo-Stacks) aufgebaut sein.

Weitere besonders vorteilhafte Ausgestaltungen und Weiterbildungen der Erfindung ergeben sich auch aus den abhängigen Ansprüchen sowie der nachfolgenden Beschreibung. Dabei kann das Verfahren auch entsprechend den abhängigen Ansprüchen zur Düse bzw. Dosiervorrichtung und gemäß den Ausführungen in der folgenden Beschreibung weitergebildet sein und umgekehrt. Dabei können auch Merkmale aus verschiedenen Ausführungsbeispielen kombiniert werden, um zu neuen Ausführungsbeispielen im Rahmen der Erfindung zu gelangen.

Der erste piezoelektrische Aktor und der zweite piezoelektrische Aktor sind vorzugsweise so angeordnet und ausgebildet, dass die Ausstoßrichtung und die Rückzugsrichtung des Verschlusselements im Wesentlichen entlang, d. h. parallel oder bevorzugt koaxial zu, einer Wirkrichtungsachse der piezoelektrischen Aktoren liegen. Unter der Wirkrichtungsachse eines Aktors ist hierbei die (gedachte) Achse zu verstehen, entlang deren der Aktor seine wesentliche Ausdehnungsrichtung aufweist und in der er den gewünschten Druck bzw. seine Wirkung als Druckelement ausüben kann. Eine parallele und insbesondere eine koaxiale Ausrichtung der Wirkrichtungsachsen der Aktoren und der Ausstoß- bzw. Rückzugsrichtung des Verschlusselements bewirkt, dass insbesondere sehr geringe Wirkverluste, d. h. Kraftverluste, bei der Bewegung des Verschlusselements zu verzeichnen sind. Dies erhöht einerseits die Präzision und andererseits die mögliche Geschwindigkeit des Verschlusselements und so insgesamt die Effektivität des Dosiersystems.

Bevorzugt fallen die Wirkrichtungsachsen der beiden piezoelektrischen Aktoren zu einer Wirkrichtungsachse zusammen. Hierzu können der erste piezoelektrische Aktor und der zweite piezoelektrische Aktor beispielsweise entlang der Wirkrichtungsachse hintereinander angeordnet sein. Besonders bevorzugt kann dann die Ausstoß- bzw. Rückzugsrichtung des Verschlusselements entlang dieser gemeinsamen Wirkrichtungsachse der piezoelektrischen Aktoren verlaufen.

Die Öffnungs- bzw. Verschlussrichtung des Verschlusselements kann dabei, insbesondere bei einer ringförmigen Ausbildung der piezoelektrischen Aktoren oder bei einer Anordnung mehrerer parallel wirkender Aktorelementen, die beispielsweise um eine Art Wirkachse herum angeordnet sind, in der sich das Verschlusselement bewegt, koaxial zur Wirkrichtung der piezoelektrischen Aktoren sein, bzw. bei anders ausgebildeten piezoelektrischen Aktoren auch parallel zur Wirkrichtung. Die Gleichgerichtetheit der Wirkrichtungen der Aktoren und der Öffnungs- und Verschlussrichtung des Verschlusselements bewirkt, dass insbesondere sehr geringe Wirk-, d.h. Kraft-Verluste bei der Bewegung des Verschlusselements zu verzeichnen sind. Dies erhöht einerseits die Präzision und andererseits die Geschwindigkeit des Verschlusselements und so insgesamt die Effektivität des Dosiersystems. So kann das Dosiersystem erheblich höhere Resonanzfrequenzen erzielen und entfaltet dadurch eine ebenso erhöhte Leistungsfähigkeit.

Insbesondere wenn der erste piezoelektrische Aktor und der zweite piezoelektrische Aktor entlang der Wirkrichtungsachse hintereinander angeordnet sind, kann das Verschlusselement vorzugsweise (direkt oder indirekt) an einer Kontaktposition zwischen dem ersten piezoelektrischen Aktor und dem zweiten piezoelektrischen Aktor mit dem ersten piezoelektrischen Aktor und/oder mit dem zweiten piezoelektrischen Aktor gekoppelt sein. Unter der Kontaktposition ist hierbei der Raum zwischen den zueinander weisenden Grenzflächen bzw. Seiten der beiden in Reihe angeordneten piezoelektrischen Aktoren zu verstehen. Hierzu ist z. B. ein Kopplungsteil des Verschlusselements zwischen die beiden piezoelektrischen Aktoren in Reihe "geschaltet".

Vorteilhafterweise kann hierzu das Verschlusselement fest zwischen dem ersten und zweiten piezoelektrischen Aktor eingeklemmt sein. Hieraus ergibt sich eine effektive Kraftkopplung zwischen den piezoelektrischen Aktoren und dem Verschlusselement, was Reibungs- und Kraftübertragungs-Verluste erheblich mindert und daher wiederum der Effektivitätssteigerung des gesamten Dosiersystems zugute kommt. Weiterhin kann das Verschlusselement fest mit dem ersten oder zweiten piezoelektrischen Aktor verbunden sein, beispielsweise in einem Hohlraum des ersten oder zweiten piezoelektrischen Aktors.

Vorteilhafterweise kann das Dosiersystem so aufgebaut sein, dass die beiden piezoelektrischen Aktoren in ihrer Kombination immer die gleiche Gesamtlänge entlang ihrer Wirkrichtungsachse aufweisen und sich gegenseitig in ihrer Ausdehnung ausgleichen, d. h. dass der erste piezoelektrische Aktor im Betrieb durch seine Bewegung die Bewegung des zweiten piezoelektrischen Aktors ausgleicht und der zweite piezoelektrische Aktor im Betrieb durch seine Bewegung die Bewegung des ersten piezoelektrischen Aktors ausgleicht. So können auch die mechanischen Belastungen auf den (insbesondere äußeren) Gesamtaufbau des Dosiersystems so gering wie möglich gehalten werden. Kräfte, die nach außen wirken, also beispielsweise außerhalb einer Aktorenkammer, in der die Aktoren angeordnet sein können, treten dann, abgesehen von Trägheitskräften, so gut wie überhaupt nicht auf, da nach außen nämlich keine bzw. so gut wie keine dynamische Bewegung weitergeleitet wird. Es wird daher bevorzugt, dass der erste piezoelektrische Aktor im Betrieb durch seine Abmessungsänderung eine Abmessungsänderung des zweiten piezoelektrischen Aktors ausgleicht und der zweite piezoelektrische Aktor im Betrieb durch seine Abmessungsänderung eine Abmessungsänderung des ersten piezoelektrischen Aktors ausgleicht. Ein solcher Ausgleich wird einerseits durch den (bevorzugt gleichen bzw. annähernd gleichen) Hub der beiden piezoelektrischen Aktoren, beispielsweise durch Verwendung von piezoelektrischen Aktoren, deren Abmessungen in Richtung der Abmessungsänderung gleich dimensioniert sind - bevorzugt durch baugleiche piezoelektrische Aktoren erzielt. Andererseits muss eine bzw. mehrere Steuerungseinheit(en) für einen bzw. beide piezoelektrische Aktoren so ausgebildet sein, dass sie im Betrieb Steuerbefehle generiert/generieren, die einen solchen gleichmäßigen Ausgleich der jeweiligen Abmessungsänderungen der piezoelektrischen Aktoren realisieren. Mit anderen Worten: Die Bauform der piezoelektrischen Aktoren und deren Steuerung(en) sind aufeinander zum Zwecke eines solchen Ausgleichs abgestimmt.

Wie oben erwähnt ist es grundsätzlich möglich, das Verschlusselement beispielsweise tropfenförmig, kugelförmig, elliptisch, unregelmäßig oder ein- oder zweiseitig konisch auszubilden. Es ist jedoch besonders bevorzugt, dass die Düse ein solches Verschlusselement aufweist, das durch eine längliche Ausdehnung eine Wirkrichtung des Verschlusselements definiert. Bevorzugt umfasst es dabei einen länglichen Stößel. Ein solcher Stößel ist im Wesentlichen zylinderförmig aufgebaut, wobei er (wie im Übrigen auch jedes andere Verschlusselement) an seiner Außenoberfläche auch bereichsweise Ausbuchtungen beziehungsweise Einbuchtungen aufweisen kann, die beispielsweise auch als durchgehende Löcher ausgebildet sein können. Solche Aus- bzw. Einbuchtungen können insbesondere dazu dienen, das Verschlusselement mit Angriffselementen anderer mechanischer Vorrichtungen zu verbinden. Über diese Angriffspunkte kann ein Kraft- oder Formschluss mit solchen Vorrichtungen zur gezielten Bewegung des Verschlusselements erzielt werden.

Vorteilhafterweise ist mindestens einer der piezoelektrischen Aktoren zylinderförmig, bevorzugt rohrförmig, ausgebildet. Er kann dadurch besonders gleichmäßig ausgebildet werden und weist einen besonders vorteilhaften Querschnitt auf: Er kann nämlich besonders einfach in eine Aktorenkammer eingefügt werden, da zylinderförmige Querschnitte von Aktorenkammern im Vergleich etwa zu eckigen Kammern besonders einfach herzustellen und bereitzustellen sind. Es ist jedoch auch möglich, mindestens einen der piezoelektrischen Aktoren nicht zylinderförmig, beispielsweise eckig, auszubilden. Auch eine Kombination aus einem ersten, zylindrischen, piezoelektrischen Aktor und einem zweiten, nicht-zylindrischen Aktor ist möglich. (Recht-)eckige Aktoren haben den Vorteil der einfacheren Herstellbarkeit und daher auch der günstigeren Beziehbarkeit. Bei einer Kombination von zylindrischem und nichtzylindrischem Aktor kann daher einerseits der Vorteil eines zylindrischen, insbesondere rohrförmigen, Aktors, nämlich u.a. die einfache Verbindbarkeit mit dem Verschlusselement, erreicht werden. Andererseits können in einem gewissen Rahmen auch Kosten und Aufwand durch die Verwendung des nichtzylindrischen Aktors eingespart werden.

Insbesondere kann das Verschlusselement zumindest teilweise in einem durch eine Form mindestens eines der piezoelektrischen Aktoren gebildeten Hohlraum angeordnet sein, wobei es dann beispielsweise auch möglich ist, dass auch der zweite piezoelektrische Aktor hohl ist. Eine solche Anordnung des Verschlusselements in einem Bereich des Hohlraums mindestens eines der piezoelektrischen Aktoren ist besonders platzsparend und bietet die Gelegenheit einer sehr präzisen und einfachen Kraftkopplung zwischen dem piezoelektrischen Aktor und dem Verschlusselement. Alternativ kann ein rohrförmiger piezoelektrischer Aktor beispielsweise auch durch mehrere, vorzugsweise mindestens zwei, besonders bevorzugt mindestens drei, parallel angeordnete und parallel wirkende piezoelektrischen Aktorelemente, insbesondere Piezostäbe oder dergleichen, ersetzt werden, die gemeinsam als eine Gruppe (bzw. als ein Aktor) angesteuert werden. Diese (z. B. jeweils als Piezo-Stacks realisierte) piezoelektrischen Aktorelemente bzw. Piezostäbe können beispielsweise auf einem Kreisring um das Verschlusselement (oder einem damit gekoppelten Kopplungselement) im Wesentlichen gleichmäßig verteilt angeordnet sein, um die gleiche Wirkung wie mit einem rohrförmigen piezoelektrischen Aktor zu erzielen.

Oftmals ist es bevorzugt, dass beide piezoelektrischen Aktoren baugleich ausgebildet sind. Dies erspart nicht nur Aufwände bei der Abstimmung der beiden Aktoren aufeinander, sondern auch bei der Ausgestaltung einer Aktorenkammer und entsprechend bei der Abstimmung der Bewegungsprozesse.

Wie bereits erwähnt, ist bevorzugt mindestens einer der beiden piezoelektrischen Aktoren in einer Aktorenkammer angeordnet. Besondere Vorteile ergeben sich dann, wenn beide piezoelektrische Aktoren in einer gemeinsamen Aktorenkammer angeordnet sind. Hierdurch ist es möglich, dass das Zusammenwirken der beiden piezoelektrischen Aktoren optimiert, insbesondere optimal abgestimmt ist und keine Wirkverluste auftreten. Beispielsweise kann so erreicht werden, dass der erste piezoelektrische Aktor und der zweite piezoelektrische Aktor in ihren im Betrieb gemeinsam durchgeführten Abmessungsänderungen innerhalb der Aktorenkammer auf ein definiertes maximales Gesamtmaß begrenzt sind. Ein solches maximales Gesamtmaß kann alleine durch die Innenabmessungen der Aktorenkammer definiert sein, es können jedoch zusätzlich auch noch Abstandshalter innerhalb der Aktorenkammer angeordnet sein, die die Innenabmessungen der Aktorenkammer so reduzieren, dass das definierte maximale Gesamtmaß genau erreicht wird. Durch solche Abstandshalter kann das Gesamtmaß auch definiert variiert werden, beispielsweise dadurch, dass die Position eines solchen Abstandshalters mittels Schrauben oder ähnlichen Verstellelementen von außerhalb der Aktorenkammer fein eingestellt werden kann.

Im erfindungsgemäßen Dosiersystem sind mehrere voneinander funktional zu trennende Einheiten angeordnet: Dies ist einerseits die Düse selbst, die der Dosierung des Ausstoßes des Dosierstoffs dient, andererseits das Aktorsystem, das bewegliche Teile (d. h. insbesondere das Verschlusselement) in der Düse bewegt, und zuletzt die Dosierstoffvorratskammer und ihre Leitungen in Richtung der Düse, die den Dosierstoff bereitstellen. Bevorzugt sind diese als funktional voneinander trennbare Einheiten auch in separaten Bereichen angeordnet. Insbesondere ist es bevorzugt, dass das Dosiersystem einen ersten Gehäuseteil umfasst, der die Düse umfasst, und einen zweiten Gehäuseteil, der mindestens einen Aktor (beispielsweise mindestens einen piezoelektrischen Aktor) fixiert. Dabei kann vorteilhafterweise vorgesehen sein, dass der erste Gehäuseteil und der zweite Gehäuseteil miteinander über Federn elastisch verbunden sind. Eine solche elastische Federung dient dazu, Vibrationen beim Betrieb des Aktorsystems aufzufangen und gewisse Toleranzen bereitzustellen. Außerdem ist durch die beiden voneinander trennbaren Gehäuseteile sichergestellt, dass das Aktorsystem bei einer Wartung komplett von dem Bereich der Düse abgetrennt werden kann. Ähnlich verhält es sich auch mit der Dosierstoffvorratskammer, die bevorzugt ebenso vom Aktor, also beispielsweise vom ersten und zweiten piezoelektrischen Aktor separiert ist. Besonders bevorzugt ist sie als separates, an die anderen Teile des Dosiersystems anschließbares Kammer- und Leitungssystem ausgebildet, das durch einfaches Verbinden beispielsweise mittels Schrauben und Leitungsbuchsen mit einem Gehäuse des Dosiersystems verbunden werden kann. Sie ist daher auch von der Düse selbst abtrennbar.

Die Bewegung des Verschlusselements wird erfindungsgemäß mithilfe zumindest eines Paars von piezoelektrischen Aktoren durchgeführt. Hierzu bzw. zur Druckregelung umfasst das Dosiersystem bevorzugt eine elektronische Steuerungseinheit zur Steuerung des Aktorsystems und/oder eines Drucks in einer Dosierstoffvorratskammer des Dosiersystems. Die Steuerungseinheit muss nicht zwangsläufig innerhalb eines Gehäuses des Dosiersystems, sondern kann auch außerhalb angeordnet sein. Über Signalleitungen kann sie dann mit dem Inneren des Gehäuses des Dosiersystems verbunden sein. Das Aktorsystem ist also nicht aufgrund einer ihm inhärenten Logik aktiv, sondern es wird "intelligent" durch eine elektronische Steuerungseinheit gesteuert, die beispielsweise einen Prozessor umfassen kann, der softwaregesteuert Steuersignale an das Aktorsystem abgibt. Derartige Steuerungseinheiten erreichen heute Taktraten der Dosierung im Bereich von 14 kHz, was bedeutet, dass die Bewegung des Verschlusselements hochfein gesteuert werden kann.

Vorteilhafte Weiterbildungen der Erfindung beziehen sich auf ein sogenanntes offenes System, bei dem das Dosiersystem eine Düse mit einem Verschlusskanal umfasst, innerhalb dessen das Verschlusselement im Betrieb gesteuert durch eine automatische Steuerungseinheit in einer Öffnungs- und/oder Verschlussrichtung bewegt wird, wobei der Verschlusskanal in mindestens einem Querschnitt senkrecht zur Öffnungs- und/oder Verschlussrichtung im Verhältnis zum Querschnitt des Verschlusselements in derselben Schnittebene so ausgebildet ist, dass sich zwischen der Außenoberfläche des Verschlusselements und der Innenoberfläche des Verschlusskanals ein Durchlassspalt ergibt, der so geformt und/oder dimensioniert ist, dass er mindestens bereichsweise einen Durchlasskanal für den Dosierstoff bildet.

Besonders bevorzugt ist in diesem Zusammenhang die Steuerungseinheit so ausgebildet, dass sie das Verschlusselement im Betrieb gezielt so bewegt, dass die Viskosität des Dosierstoffs mindestens in einem Bereich des Durchlassspalts reduziert wird.

Allgemein wird unter einem flüssigen bis zähflüssigen Dosierstoff im Rahmen der Erfindung jede Flüssigkeit beziehungsweise jedes eine Flüssigkeit umfassende Stoffgemisch mit Fließeigenschaften definiert. Die Definition von Zähflüssigkeit erstreckt sich hierbei von einer Viskosität oberhalb der von Wasser bis zu einer Viskosität, die nahezu den Eigenschaften eines Feststoffs entspricht. Besonders bevorzugt ist dabei, dass der Dosierstoff thixotrope bzw. scherverdünnende (d.h. strukturviskose) Eigenschaften aufweist, das heißt, dass seine Viskosität in einem Ruhezustand höher ist als in einem Bewegungszustand und dass bei der Rückkehr in einen Ruhezustand die ursprüngliche höhere Viskosität zumindest annähernd (ggf. nach einer gewissen Ruhephase) wieder erreicht wird. Als zähflüssig werden daher auch noch Stoffe bzw. Medien bezeichnet, die in einem Ruhezustand Eigenschaften eines Feststoffs aufweisen und die lediglich im Bewegungszustand fließfähig sind.

Entscheidend ist für die hier beschriebene Weiterbildung eines offenen Dosiersystems das Zusammenwirken zwischen dem Verschlusselement und dem Verschlusskanal in dem Sinne, dass zwischen dem Verschlusselement und dem Verschlusskanal mindestens bereichsweise ein ausreichend großer Durchlassspalt definiert wird, durch den der Dosierstoff hindurchgelangen kann. Dieser Durchlassspalt bildet einen Durchlasskanal für den Dosierstoff aus, der bevorzugt mit der Austrittsöffnung der Düse verbunden ist. Der Dosierstoff kann in einem ausreichend bewegten Zustand durch den Durchlasskanal fließen. In einem unbewegten Zustand hingegen oder in einem Bewegungsmuster, in dem die Viskosität nur wenig abgesenkt wird, verbleibt der Dosierstoff bevorzugt im durch den Durchlassspalt gebildeten Durchlasskanal, ohne weiterzufließen. Dies bedeutet, dass die Dimensionierung des Durchlassspalts bzw. des Durchlasskanals so gewählt ist, dass unter den jeweils vorgegebenen Druckverhältnissen des Dosierstoffs im Dosiersystem bei bestimmungsgemäßer Betriebstemperatur kein oder im Wesentlichen kein Durchfließen möglich ist, sobald der Dosierstoff nicht mehr oder eventuell nur gering in Bewegung ist. In diesem Sinne verschließen das Verschlusselement und der ihm zugeordnete Durchlasskanal gemeinsam gegen den Dosierstoff, das heißt gegen das Medium, das durch diesen Verschluss zurückgehalten wird. Im Endeffekt wird ein solcher Verschluss dadurch gebildet, dass eine zwar prinzipiell offene Anordnung bereitgestellt wird, durch die der Dosierstoff in einem ausreichend bewegten Zustand relativ ungehindert fließen kann, jedoch aufgrund der thixotropen bzw. scherverdünnenden Eigenschaften des Dosierstoffs automatisch dann verschließt, wenn die Bewegung des Verschlusselements im Verschlusskanal endet. In einem völligen Ruhezustand des Verschlusselements relativ zum Verschlusskanal findet daher kein Materialfluss statt. Ein Verschließen der Austrittsöffnung der Düse ist nicht notwendig, bevorzugt ist die Austrittsöffnung daher immer offen gehalten. Eine ganz gezielte Abgabe von Dosierstoff kann darüber hinaus durch die unterschiedlichen Bewegungsmodi genau kontrolliert werden, wie später noch erläutert wird.

Die Dimensionierung des Querschnitts des Verschlusselements im Verhältnis zum Querschnitt des Verschlusskanals wird einerseits in Abhängigkeit von der Viskosität des zu applizierenden Dosierstoffs (bzw. dessen Viskosität in Abhängigkeit von einem Bewegungszustand) und andererseits von einem an den Dosierstoff angelegten Druck gewählt. Als Faustregeln gelten dabei:
- Je höher der Druck des Dosierstoffs ist, desto kleiner kann der Durchlassspalt dimensioniert sein.
- Je niedriger die Viskosität des Dosierstoffs in einem Ruhezustand des Dosierstoffs ist, desto kleiner kann der Durchlassspalt dimensioniert sein.
- Je niedriger die Viskosität des Dosierstoffs in einem Bewegungszustand ist, desto kleiner kann der Durchlassspalt dimensioniert sein.

Die Größe des Durchlassspalts im Querschnitt, d.h. die Querschnittsfläche des Durchlassspalts, wird so gewählt, dass der Dosierstoff bei einem Stillstand des Verschlusselements keine oder eine deutlich verminderte Bewegung im Vergleich zu einem freien Fluss unter gleichen Druckverhältnissen durchführt. Mit anderen Worten besteht das Prinzip der Erfindung also darin, den Durchlassspalt zwischen Verschlusselement und Verschlusskanal in Abhängigkeit vom jeweiligen Dosierstoff und/oder vom angelegten Druck des Dosierstoffs so zu dimensionieren, dass sich trotz des Durchlassspalts eine durch die Scherviskosität des Dosierstoffs bedingte Verschlusswirkung innerhalb der Düse ergibt. Andererseits soll der Durchlassspalt auch so dimensioniert sein, dass die Viskosität des Dosierstoffs bei einer ausreichenden Bewegung des Verschlusselements innerhalb des Verschlusskanals so reduziert wird, dass der Dosierstoff durch den Verschlusskanal fließen und ein volumetrisches Nachführen gewährleistet werden kann. Damit wird der Durchlassspalt zum Durchlass für den Dosierstoff, sobald sich das Verschlusselement innerhalb des Verschlusskanals bewegt. Die Verschlusswirkung durch das Zusammenspiel zwischen Verschlusselement und Verschlusskanal ist daher eine temporäre und wird bei Bewegung des Verschlusselements durch eine Anregung des Dosierstoffs zum Fließen in das Gegenteil verkehrt.

Mit einer solchen Methode beziehungsweise einer solchen Düse ist es möglich, spezielle, auch hochviskose, nämlich thixotrope und scherverdünnende Dosierstoffe im Betrieb der Düse so aufzubereiten, dass sie ihre Viskositätseigenschaften automatisch ändern, nämlich reduzieren, wenn das Verschlusselement bewegt wird. Im Gegensatz zu den üblichen Düsenverschlüssen, bei denen ein Verschlusselement auf die Austrittsöffnung gedrückt wird, um diese zu verschließen, und bei denen das Verschlusselement von der Austrittsöffnung der Düse wegbewegt wird, um die Austrittsöffnung freizugeben, kann die Austrittsöffnung hier also jederzeit freigehalten sein. Dennoch ergeben sich eben gerade nicht die Nachteile, wie sie der oben zitierte Stand der Technik aufweist. Auch der an den Dosierstoff angelegte Druck braucht nicht drastisch erhöht zu werden; vielmehr genügt es, herkömmliche Druckverhältnisse bereitzustellen, wie sie auch bei niedrigviskosen Dosierstoffen angelegt werden. Gleichzeitig kann durch die Reduzierung der Viskosität des Dosierstoffs im Betrieb der Düse erreicht werden, dass er überhaupt und zudem genauer dosiert werden kann. Es ist also eine feinere Dosierung möglich und ein hochpräzise vorab definierter Tropfenabriss jedes einzelnen Tropfens des Dosierstoffs kann erzielt werden. Dies erhöht auch die Dosiergeschwindigkeit, d.h. im Endeffekt den potenziellen Durchsatz des erfindungsgemäßen Dosiersystems.

Um einen Durchfluss des Dosierstoffs durch den Durchlassspalt zu ermöglichen, ist es notwendig, dass der Durchlassspalt mindestens eine Ausdehnung zwischen der Außenoberfläche des Verschlusselements und der Innenoberfläche des Verschlusskanals entsprechend der Ausdehnung von einem, bevorzugt von mindestens drei Partikeln des Dosierstoffs nebeneinander, besonders bevorzugt mindestens 0,05 mm, aufweist. Dabei ist zu beachten, dass mindestens jeweils die größten Partikel des Dosierstoffs durch den Durchlassspalt passieren können müssen. Der Begriff des "Partikels" ist in diesem Zusammenhang sehr flexibel zu definieren: Er umfasst auch Polymerketten oder einzelne Teilverbünde davon, die bei Ausübung von Scherkräften auf Polymerketten vereinzelt werden können. Als "größte Partikel" werden in diesem Zusammenhang jene Partikel bezeichnet, die bei Ausübung von Scherkräften, die die Viskosität substantiell verringern, vorhanden sind: Insbesondere bei Polymerketten enthaltenden Dosierstoffen kann die Reduzierung der Viskosität nämlich auch dadurch entstehen, dass die Polymerketten bereichsweise aufgerissen werden und somit eben kleinere Partikelgrößen entstehen, deren größtes durch den Durchlassspalt passieren können muss. Die Größenangabe der Mindestausdehnung bezieht sich weiterhin mindestens auf eines der größten Partikel des Dosierstoffs in dem Sinne, dass es in seiner Ausdehnungsrichtung mit der geringsten Ausdehnung den höchsten Ausdehnungswert aller Partikel des Dosierstoffs aufweist. Mit dieser geringsten Ausdehnung ist dabei eine solche Ausdehnung gemeint, die dann entsteht, wenn das Partikel innerhalb seiner ihm eigenen Elastizitätsgrenzen zusammengedrückt wird.

Der Fluss des Dosierstoffs kann insbesondere dann gewährleistet werden, wenn eine Mehrzahl, d.h. mindestens zwei, bevorzugt mindestens drei Partikel im Durchlassspalt nebeneinander Platz finden. In Versuchen hat sich herausgestellt, dass ein ringförmiger Durchlassspalt besonders gut geeignet ist, um einen kontrollierten Durchfluss bzw. eine kontrollierte Verschlusswirkung zu erzielen. Dies kann durch einen kreisförmigen Querschnitt der Innenoberfläche des Verschlusskanals in Kombination mit einem kreisförmigen Querschnitt des Verschlusselements und eine vorzugsweise axial zentrierte Anordnung des Verschlusselements im Verschlusskanal erreicht werden. Die Versuche haben weiterhin ergeben, dass bei einem solchen ringförmigen Durchlassspalt einer Spaltbreite im Querschnitt von 0,1 mm +/-10 % Varianz bei den derzeitigen typischen Druckverhältnissen besonders gut geeignet ist, um einen guten Durchfluss im Bewegungszustand des Verschlusselements und einen guten Verschluss im Ruhezustand des Verschlusselements zu erreichen. Bei Dosierstoffen wie denen der eingangs genannten Art werden derzeit typisch Drücke von 0,5 bis 8 bar angelegt. Andere Geometrien sind aber prinzipiell auch möglich.

Die Obergrenze der Ausdehnung des Durchlassspalts zwischen der Außenoberfläche des Verschlusselements und der Innenoberfläche des Verschlusskanals, d. h. der lichten Spaltbreite des Durchlassspalts, definiert sich wie folgt: Der aufgrund der Ausdehnung auf den Dosierstoff wirkende Strömungswiderstand muss mindestens gleich groß sein wie ein Strömungswiderstand auf den Dosierstoff im Bereich einer Austrittsöffnung der Düse. Wäre der Strömungswiderstand im Bereich des Verschlusskanals nämlich kleiner als im Bereich der Austrittsöffnung, so würde der Dosierstoff nicht aus der Austrittsdüse gedrückt. In Versuchen und Simulationen hat sich folgende Matrix der Ausdehnung (d. h. der Spaltbreite) des Durchlassspalts in Abhängigkeit von den Dimensionierungen von Austrittsöffnung und des Verschlusselements ergeben, vorausgesetzt, dass die Austrittsöffnung immer 0,5 mm lang und die Länge des Durchlassspalts, durch den Dosierstoff geführt wird, immer 10mm beträgt:

| Durchmesser der Austrittsöffnung in mm | Durchmesser des Verschlusselements, realisiert als im Bereich des Durchlassspalts zylindrisch geformter Stößel, in mm | Maximale Spaltbreite in mm |
|---|---|---|
| 0,05 | 1 | 0,006 |
| 0,1 | | 0,02 |
| 0,2 | | 0,09 |
| 0,4 | | 0,35 |
| 1 | | 2,3 |
| 0,05 | 1,5 | 0,004 |
| 0,1 | | 0,015 |
| 0,2 | | 0,05 |
| 0,4 | | 0,24 |
| 1 | | 1,5 |
| 0,05 | 2 | 0,003 |
| 0,1 | | 0,012 |
| 0,2 | | 0,045 |
| 0,4 | | 0,18 |
| 1 | | 1,12 |
| 0,05 | 4 | 0,001 |
| 0,1 | | 0,005 |
| 0,2 | | 0,023 |
| 0,4 | | 0,09 |
| 1 | | 0,56 |

Diese jeweiligen Parameterwert-Kombinationen sind jeweils als bevorzugte Ausführungsformen zu verstehen.

Bei der Dimensionierung des Durchlassspalts sollte bevorzugt neben dem Strömungswiderstand auch berücksichtigt werden, dass der Dosierstoff im Durchlassspalt langsam von einem fließenden in einen ruhenden Zustand überführt werden und dann den Durchlassspalt verschließen soll. Der Durchlassspalt muss also eine gewisse Abbremswirkung ermöglichen. Diese Abbremswirkung wird bevorzugt immer dann eingeleitet, wenn das Verschlusselement von einer Bewegung relativ zum Verschlusskanal in einen Stillstand versetzt wird.

Statt einer ringförmigen oder anderweitig umlaufenden Form kann der Durchlassspalt im Querschnitt auch nur in einem diskreten Bereich ausgebildet sein, beispielsweise durch eine Aussparung im Verschlusselement. Die jeweilige Form kann je nach Anwendungsgebiet, insbesondere in Abhängigkeit von den oben erläuterten Einflussfaktoren des Drucks auf den Dosierstoff und seiner Viskosität, individuell gewählt sein. Das erfindungsgemäße Dosiersystem umfasst daher bevorzugt eine Mehrzahl an (Austausch-) Verschlusselementen und/oder an (Austausch-) Verschlusskanälen, von denen mindestens ein Verschlusselement und ein Verschlusskanal aufeinander in ihrer Form so abgestimmt sind, dass sie im Zusammenwirken einen Durchlassspalt der oben näher erläuterten Art bilden. Diese Austausch-Vorrichtungen können daher in Abhängigkeit vom jeweils zu dosierenden Dosierstoff in die Düse eingesetzt werden. Besonders bevorzugt weisen die jeweiligen (Austausch-) Verschlusselemente bzw. (Austausch-) Verschlusskanäle Markierungen auf, anhand derer ihre gegenseitige Zuordnung und/oder ihre Eignung für bestimmte Dosierstoffe ableitbar ist.

Besonders bevorzugt weist die Düse weiterhin einen Dosierstoff-Sammelhohlraum im Düsenbereich auf, besonders bevorzugt in einem Düsenendbereich angrenzend an eine Austrittsöffnung der Düse. Dieser Dosierstoff-Sammelhohlraum ist zwischen dem Verschlusskanal und der Austrittsöffnung für den Dosierstoff angeordnet und so geformt und/oder lokalisiert, dass das Verschlusselement aufgrund seiner Form und/oder Lokalisierung ihn zumindest nicht vollständig ausfüllt. Es ist bevorzugt ein Dosierstoff-Sammelhohlraum, dessen Dimensionen im Querschnitt größer sind als die Gesamtfläche des Durchlassspalts zwischen dem Verschlusselement und dem Verschlusskanal. Da der durch den Durchlassspalt geflossene Dosierstoff in diesem Dosierstoff-Sammelhohlraum gesammelt und dann gezielt durch einen größeren Hub des Verschlusselements bei einer Bewegung in der Ausstoßrichtung durch die Austrittsöffnung gestoßen werden kann, ist ein klar dosierter, schneller und präziser Ausstoß des Dosierstoffs, insbesondere in Tropfenform, möglich.

Um den Dosierstoff in der Düse bereitzustellen, wird er über eine Leitung aus einer Dosierstoffvorratskammer zugeführt. Prinzipiell ist es dabei möglich, den Durchlassspalt lediglich als eine Art Reservoir oder Aktivierungsbereich für den Dosierstoff vorzusehen, in dem Teile des zugeführten Dosierstoffs abgelagert und durch entsprechende Bewegungen des Verschlusselements verflüssigt werden. Bevorzugt umfasst das Dosiersystem hingegen eine Zuführung einer Leitung aus einer Dosierstoffvorratskammer zur Bereitstellung des Dosierstoffs, wobei die Zuführung in den durch den Verschlusskanal gebildeten Durchlassspalt führt und/oder an einem einer Austrittsöffnung der Düse abgewandten Ende des Verschlusskanals angeordnet ist. Die Zuführungsleitung aus der Dosierstoffvorratskammer führt also in diesem Falle direkt oder indirekt in den Bereich des Verschlusskanals, das heißt des Durchlassspalts. Dies hat den Effekt, dass der Dosierstoff auf jeden Fall zumindest bereichsweise durch den Durchlassspalt hindurch fließen muss, so dass der Durchlassspalt eine Öffnungs- bzw. Verschlusswirkung für den Fluss des Dosierstoffs ausübt.

Jenseits eines einer Austrittsöffnung der Düse abgewandten Endes des Verschlusskanals kann eine Dichtung angeordnet sein, die die Düse so gegen einen Aktorbereich des Dosiersystems abdichtet, dass der Dosierstoff sie in bestimmungsgemäßem Zustand nicht passieren kann. Diese Dichtung, beispielsweise eine Ringdichtung in dem Bereich, in dem das Verschlusselement mit dem Aktorbereich verbunden wird, dichtet in Richtung des Aktorbereichs und ggf. auch anderer Funktionsbereiche des Dosiersystems in effektiver und einfach zu bereitstellender Weise ab.

Das erfindungsgemäße Dosiersystem umfasst wie erwähnt bevorzugt außerdem eine Dosierstoffvorratskammer, die über eine Leitung in Richtung einer Austrittsöffnung mit der Düse verbunden ist. Die Bevorratung des Dosierstoffs erfolgt also innerhalb des Dosiersystems, so dass dieses als eine Einheit verbaut beziehungsweise transportiert werden kann.

Im Rahmen dessen ist es bevorzugt, dass die Steuerungseinheit so ausgebildet ist, dass sie im Betrieb Steuersignale für unterschiedliche Bewegungen des Verschlusselements in mindestens zwei Bewegungsmodi generiert. Solche Bewegungsmodi, das heißt Qualitätsstufen der Bewegung des Verschlusselements, bei denen das Verschlusselement unterschiedliche Bewegungsmuster durchläuft, können insbesondere dazu dienen, unterschiedliche Funktionen während des Dosierprozesses des Dosierstoffs abzudecken. Dadurch können beispielsweise auch einzelne sehr genau dosierte Tropfen abgegeben werden.

Eine erste solche Funktion wäre beispielsweise die des Flüssighaltens des Dosierstoffs in einem Flüssighaltemodus. Hierzu umfasst ein erster Bewegungsmodus bevorzugt ein Bewegungsmuster mit hochfeinen Hin- und Herbewegungen des Verschlusselements, deren Hub (d.h. Amplitude) und/oder Frequenz und/oder Rhythmus so gewählt sind, dass sie zur Überwindung von Kräften innerhalb des Dosierstoffs geeignet sind, die die Viskosität desselben signifikant, d.h. um mindestens 50%, bevorzugt um mindestens 99%, reduzieren. Als "hochfeine" Hin- und Herbewegung ist dabei eine solche Bewegung zu verstehen, deren Hub geringer und deren Frequenz höher ist als die Bewegung im (unten näher spezifizierten) zweiten Bewegungsmodus. Vorzugsweise liegt die Frequenz der hochfeinen Bewegung oberhalb von 10 kHz. Eine einfache Oszillationsbewegung mit einem sehr geringen Hub ist bei richtiger Wahl der (im Vergleich zum zweiten Bewegungsmodus erhöhten) Frequenz beziehungsweise des Rhythmus bereits dazu geeignet, eine solche Reduzierung der Viskosität zu erzielen. Dieser erste Bewegungsmodus dient also dazu, den Fluss des Dosierstoffes zu gewährleisten. Das Bewegungsmuster mit den hochfeinen Oszillationsbewegungen führt aber vorzugsweise unter den jeweils vorgegebenen Druckverhältnissen des Dosierstoffs im Dosiersystem allein, also ohne eine geeignete Ausstoßbewegung durch das Verschlusselement, wie sie z. B. nachfolgend beschrieben wird, nicht dazu, dass Dosierstoff aus der Düse fließt.

Eine zweite solche Funktion dient dagegen bevorzugt dem Ausstoß des Dosierstoffs durch die Austrittsöffnung der Düse. Hierzu umfasst ein zweiter Bewegungsmodus ein Bewegungsmuster mit Ausstoßbewegungen des Verschlusselements, deren Hub und/oder Frequenz und/oder Rhythmus so gewählt ist, dass sie dazu geeignet sind, den Dosierstoff tropfen- und/oder strahlweise durch eine Austrittsöffnung der Düse herauszudrücken, wenn das Verschlusselement in der Ausstoßrichtung bewegt wird. Wird das Verschlusselement in einer der Ausstoßrichtung entgegen gerichteten Rückzugsrichtung bewegt, kann Dosierstoff in der Düse vor das Verschlusselements strömen, um dann bei der nächsten Bewegung in der Ausstoßrichtung aus der Düse ausgestoßen zu werden. Bei dieser zweiten Art von Bewegungsmuster ist der Hub betragsmäßig bevorzugt größer als der bei oben erwähnten hochfeinen Bewegungsmuster des ersten Bewegungsmodus, wobei die Frequenz auch kleiner gewählt sein kann und ein Rhythmus ebenfalls längere Abstände beinhalten kann als der Rhythmus im Zusammenhang mit der ersten Funktion.

Es bleibt zu erwähnen, dass ein Bewegungsmodus auch dadurch definiert sein kann, dass das Verschlusselement sich eben gerade nicht bewegt. Dieser Bewegungsmodus kann als Stillstand- oder Verschlussmodus bezeichnet werden, da der Dosierstoff durch die komplette Inaktivität des Verschlusselements zunächst abgebremst wird und dann in einem Stillstand verbleibt. In diesem Stillstand erhöht sich seine Viskosität signifikant, so dass kein weiterer Durchfluss durch den Durchlassspalt mehr möglich ist.

Ein weiterer Bewegungsmodus kann bevorzugt ein Bewegungsmuster mit Hin- und Herbewegungen zwischen zwei Extremstellungen aufweisen, wobei das Verschlusselement zumindest in einer Extremstellung eine bestimmte Zeitspanne lang festgehalten wird. Dies ist insbesondere in einem Bewegungsmodus von Vorteil, der dem Ausstoß des Dosierstoffs durch die Austrittsöffnung der Düse dient. Es kann dann beispielsweise bewusst dafür gesorgt werden, dass der Dosierstoff in einer bestimmten Stellung des Verschlusselements vor einem Ausstoßen des Dosierstoffs zunächst vor das Verschlusselements fließen kann oder dass nach dem Ausstoß eines Tropfens der Dosierstoff zunächst etwas zur Ruhe kommt und die Fließbewegung so stärker abgestoppt wird.

Besonders bevorzugt ist die Steuerungseinheit so ausgebildet, insbesondere programmiert, dass sie die unterschiedlichen Bewegungen, d. h. die unterschiedlichen Bewegungsmuster und/oder Bewegungsmodi miteinander kombiniert. Z. B. kann ein Bewegungsmodus vorteilhafterweise eine Überlagerung von unterschiedlichen Bewegungsmustern aufweisen. Insbesondere können die Bewegungen der ersten und zweiten erwähnten Funktionen einander überlagert werden, so dass beispielsweise Oszillationen gemäß dem ersten Bewegungsmuster mit Ausstoßbewegungen größeren Hubs gemäß dem zweiten Bewegungsmuster so kombiniert sind, dass die Ausstoßbewegungen eine Art innere Zitterbewegung enthalten. Bevorzugt kann die Steuerung auch so erfolgen, dass unterschiedliche Bewegungsmodi nacheinander, vorzugsweise abwechselnd, durchgeführt werden. Die abwechselnde Durchführung bietet den Vorteil, dass sehr zielgerichtet und präzise zu bestimmten Zeiten der Ausstoß des Dosierstoffs veranlasst wird.

Welche Bewegungsmuster in den einzelnen Bewegungsmodi durchgeführt werden, beispielsweise welche exakten Parameter (Hub, Frequenz etc.) die Bewegungsmuster aufweisen und ob eine Überlagerung von Bewegungsmustern erfolgt und in welcher Reihenfolge welche Bewegungsmodi durchlaufen werden, hängt von den Parametern des Dosierstoffs sowie der konkreten Dosieraufgabe ab (z. B. ob der Dosierstoff tropfenweise abgegeben werden soll, und wenn ja, mit welchen Tropfengrößen und in welchem zeitlichen Abstand). Die Steuerungseinheit kann daher bevorzugt einen Speicher aufweisen, in dem für verschiedene Dosierstoffe und Dosieraufgaben die Bewegungsmuster für die verschiedenen Bewegungsmodi sowie die Abfolge der Bewegungsmodi hinterlegt sind.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Es zeigen:
Figur 1 eine Frontansicht einer Ausführungsform eines erfindungsgemäßen Dosiersystems,
Figur 2 eine Schnittansicht desselben Dosiersystems entlang einer Schnittlinie A - A aus Figur 1,
Figur 3 eine Detailansicht der Schnittansicht aus Figur 2,
Figur 4 eine Schnittansicht desselben Dosiersystems entlang einer Schnittlinie B - B aus Figur 1,
Figur 5 eine Detailansicht der Schnittansicht aus Figur 4,
Figur 6 eine schematische Bewegungskurve eines Verschlusselements gemäß einer ersten Ausführungsform des erfindungsgemäßen Verfahrens,
Figur 7 eine schematische Bewegungskurve eines Verschlusselements gemäß einer zweiten Ausführungsform des erfindungsgemäßen Verfahrens,
Figur 8 eine schematische Bewegungskurve eines Verschlusselements gemäß einer dritten Ausführungsform des erfindungsgemäßen Verfahrens,
Figur 9 eine schematische Bewegungskurve eines Verschlusselements gemäß einer vierten Ausführungsform des erfindungsgemäßen Verfahrens.

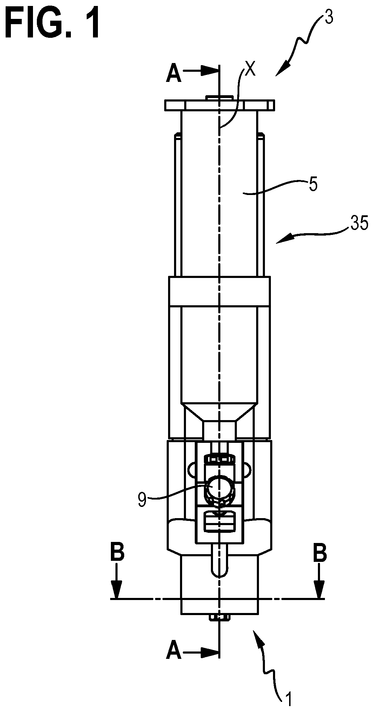

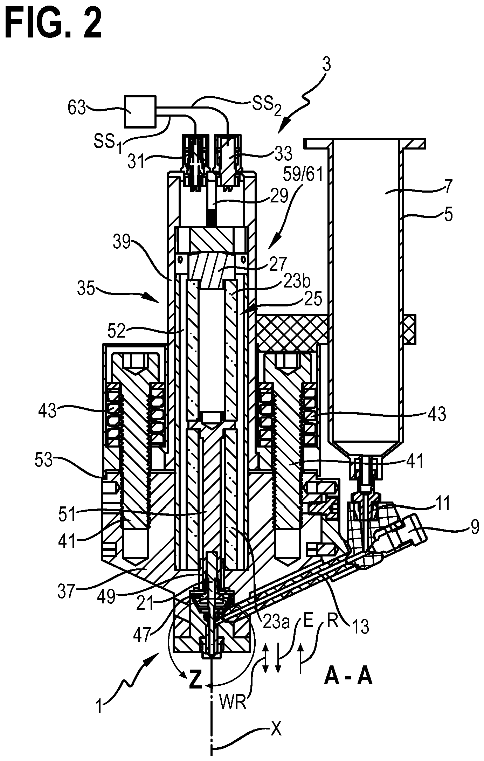

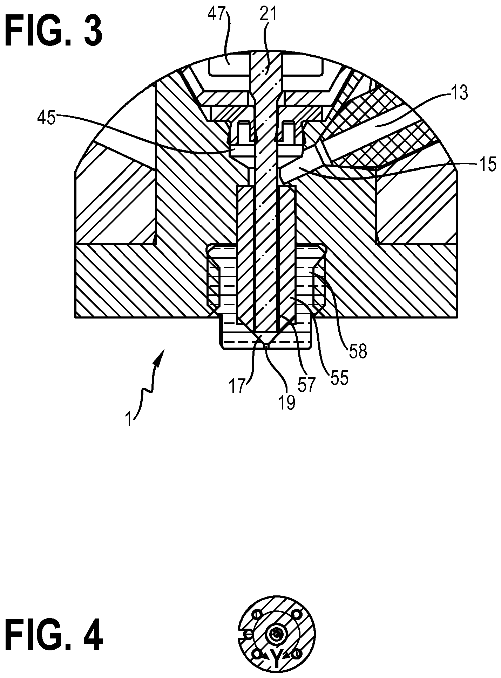

Die Figuren 1 und 2 zeigen ein Dosiersystem 3 gemäß einer Ausführungsform der Erfindung, Figur 3 eine Detailansicht aus Figur 2. Das Dosiersystem 3 umfasst eine Düse 1, einen Dosierstoffbehälter 5 mit einer Dosierstoffvorratskammer 7 und ein Gehäuse 35, in dem außer der Düse 1 eine Aktorenkammer 25 angeordnet ist.

Das Gehäuse 35 umfasst einen ersten, unteren Gehäuseteil 37 und einen zweiten, oberen Gehäuseteil 39. Die beiden Gehäuseteile 37, 39 sind über Halteschrauben 41 und durch mit den Halteschrauben 41 verbundene, vertikal ausgerichtete Federn 43 federnd miteinander verbunden. Es ergibt sich daher randseitig zwischen den beiden Gehäuseteilen 37, 39 beidseitig ein Spalt 53, also ein gewisses Spiel.

Im Gehäuse 35 ist zentral in einem Aktorbereich 59 die Aktorenkammer 25 angeordnet. In einer Ausrichtung entlang einer (Mittel-)Achse X sind ein erster piezoelektrischer Aktor 23a und ein zweiter piezoelektrischer Aktor 23b ausgerichtet und entlang der Ausrichtung der Achse X positioniert. Gemeinsam bilden die piezoelektrischen Aktoren 23a, 23b ein Aktorsystem 61. Die Aktorenkammer 25 wird oberseitig durch einen Abstandhalter 27 abgeschlossen, dessen Position über eine Abstandhalter-Stellschraube 29 von außerhalb des Gehäuses 35 reguliert werden kann. Zwei Kontaktanschlüsse 31 und 33 dienen der Kontaktierung einer elektronischen Steuerungseinheit 63 mit den beiden piezoelektrischen Aktoren 23a, 23b bei einer Maximalspannung von 240V.

Beide piezoelektrischen Aktoren 23a, 23b sind als rohrförmige, zylindrische, piezoelektrische Aktoren 23a, 23b ausgebildet und so angeordnet, dass sie im Betrieb im Wesentlichen in axialer Richtung entlang der Achse X auslenken. Bei den piezoelektrischen Aktoren 23a, 23b handelt es sich bevorzugt um Piezo-Stacks aus ringförmigen Piezoelementen. Innerhalb des Hohlraums des ersten piezoelektrischen Aktors 23a ist ein längliches Verbindungselement 51 angeordnet, das den gesamten Hohlraum ausfüllt und am dem zweiten piezoelektrischen Aktor 23b zugewandten Ende des ersten piezoelektrischen Aktors 23a auskragt. Das Verbindungselement 51 verbindet daher in dem Bereich seines Kragens die beiden piezoelektrischen Aktoren 23a, 23b form- und kraftschlüssig und sorgt für eine mechanische Kraftkopplung zwischen den beiden. Es wird zur Stabilisierung seiner Position ein wenig in einen Hohlraum 52 des zweiten piezoelektrischen Aktors 23b hineingeführt. Alternativ kann ein rohrförmiger piezoelektrischer Aktor 23a, 23b beispielsweise auch durch mehrere, vorzugsweise mindestens zwei, besonders bevorzugt mindestens drei, parallel angeordnete und parallel wirkende Piezostäbe (beispielsweise auch in Form von Piezo-Stacks) ersetzt werden. Diese Piezostäbe können beispielsweise auf einem Kreisring gleichmäßig verteilt angeordnet sein und gemeinsam als Gruppe (bzw. als ein Aktor) angesteuert werden, um die gleiche Wirkung wie mit einem rohrförmigen piezoelektrischen Aktor 23a, 23b zu erzielen. D. h. hier ist die Bewegungsrichtung des Verbindungselements 51 koaxial zur Wirkachse der als ein gemeinsamer Aktor wirkenden, parallel geschalteten Piezostäbe.

Die beiden piezoelektrischen Aktoren 23a, 23b sind gegengleich geschaltet. Dies bedeutet, dass der erste piezoelektrische Aktor 23a seine Gesamtlänge in Längsrichtung, das heißt in vertikaler Richtung, reduziert, während der zweite piezoelektrische Aktor 23b seine Länge in derselben Richtung in demselben Maße gleichzeitig erhöht. Umgekehrt erhöht der erste piezoelektrische Aktor 23a seine Gesamtlänge in Längsrichtung, während der zweite piezoelektrische Aktor 23b seine Länge in derselben Richtung in demselben Maße gleichzeitig reduziert. Dies bedeutet, dass die Gesamtlänge der beiden piezoelektrischen Aktoren 23a, 23b entlang der Achse X im Betrieb des Aktorsystems 61 im Wesentlichen immer gleich bleibt. Durch die Kopplung des Verbindungselements 51 mit den Aktoren 23a, 23b an der Nahtstelle (bzw. Kontaktposition) zwischen den Aktoren 23a, 23b wird das Verbindungselement 51 bei einer gegenläufigen Bewegung der Aktoren 23a, 23b immer von dem sich jeweils ausdehnenden Aktor 23a, 23b weggedrückt, wogegen der jeweils andere Aktor 23a, 23b entsprechenden Platz freigibt, aber mit dem Verbindungselement 51 in Kontakt bleibt und dabei sogar einen geringen Gegendruck ausübt. Dadurch wird das Verbindungselement 51 während der Hin- und Herbewegung in einem kompakten Verbund von Aktoren 23a, 23b sicher gehalten und der sich jeweils ausdehnende piezoelektrische Aktor 23a, 23b bleibt unter Vorspannung.

In das Verbindungselement 51 im ersten piezoelektrischen Aktor 23a ragt ein Verschlusselement 21 in Form eines länglichen keramischen Stößels 21 hinein. Keramische Verschlusselemente eignen sich aufgrund ihrer extremen Leichtigkeit besonders gut. Die das Verschlusselement 21 umgebenden Gehäuse- und Düsenteile sind bevorzugt aus hochfesten Materialien wie Titan gefertigt. Der Stößel 21 ist über ein in das Verbindungselement 51 eingeschraubtes Führungselement 47 (über den Kragen des Verbindungselements 51 oberseitig) mit dem ersten piezoelektrischen Aktor 23a verbunden. Der Stößel 21 ist ebenfalls entlang der Achse X ausgerichtet und wird durch das Führungselement 47 in dieser Ausrichtung gehalten. Hierzu ist das Führungselement 47 hülsenartig um den Stößel 21 herum angeordnet und greift an einer oberseitigen Verbreiterung des Stößels 21 formschlüssig an diesem an.

Der Stößel 21 reicht an seiner dem ersten piezoelektrischen Aktor 23a abgewandten Seite in den Bereich der Düse 1 hinein. Er wird durch eine Dichtung 45, nämlich eine Ringdichtung 45, geführt und führt weiter in einen Verschlusskanal 55. Dieser Verschlusskanal 55 wird durch ein zylinderförmiges hülsenartiges Element 55 gebildet, das innenseitig einen zylindrischen Hohlraum umschließt. An den Verschlusskanal 55 schließt unterseitig am Ende des Stößels 21 ein Dosierstoff-Sammelhohlraum 17 an, unterhalb dessen die Austrittsöffnung 19 der Düse 1 liegt. Dieser Dosierstoff-Sammelhohlraum 17 ist so geformt, dass ihn der Stößel 21 aufgrund seiner Form und Position in keiner Betriebsstellung vollständig ausfüllen kann.

Oberhalb des Verschlusskanals 55, nämlich zwischen der Ringdichtung 45 und dem Verschlusskanal 55, liegt eine Zuführung 15 einer Leitung 13, die den Dosierstoff von der Dosierstoffvorratskammer 7 über einen Verbindungspfropfen 11 in Richtung der Düse 1 führt.

Die Dosierstoffvorratskammer 7 ist mit einem Überdruck beaufschlagt, der dazu führt, dass der Dosierstoff durch die Leitung 13 in Richtung der Düse 1 gedrückt wird. Zur Verbindung der Dosierstoffvorratskammer 7 mit den anderen Teilen des Dosiersystems 3 dient eine Befestigungsschraube 9.

Im Betrieb des Dosiersystems 3 generiert die elektronische Steuerungseinheit 63 erste Steuersignale SS₁ und zweite Steuersignale SS₂, die über die Kontaktanschlüsse 31, 33 an die beiden piezoelektrischen Aktoren 23a, 23b weitergegeben werden und deren Bewegung, d.h. Auslenkung steuern. Diese Steuersignale SS₁, SS₂ sind so ausgebildet, dass die beiden piezolektrischen Aktoren 23a, 23b gegenläufig angeregt werden. Hierdurch entsteht das oben beschriebene gegenläufige Bewegungsmuster der beiden piezoelektrischen Aktoren 23a, 23b. Durch die Bewegung des ersten piezoelektrischen Aktors 23a, der mit dem Stößel 21 wirkverbunden ist, wird der Stößel 21 zu einer Hub- und Schubbewegung angeregt. Zieht sich also der zweite piezoelektrische Aktor 23b zusammen, während sich der erste piezoelektrische Aktor 23a gleichzeitig ausdehnt, so wird der Stößel 21 durch den ersten piezoelektrischen Aktor 23a in die Rückzugsrichtung R gedrückt. Bei der gegenläufigen Bewegung wird der Stößel 21 in einer Ausstoßrichtung E durch den zweiten piezoelektrischen Aktor 23b nach unten geschoben. Die, hier gemeinsame, Wirkrichtungsachse WR der beiden piezoelektrischen Aktoren 23a, 23b ist also genauso an der Achse X ausgerichtet wie die Ausstoß- bzw. Rückzugsrichtungen E, R, wobei durch die Kopplung des Stößels 21 mit dem aus dem ersten piezoelektrischen Aktor 23a und dem zweiten piezoelektrische Aktor 23b gebildeten Aktorsystem an einer Kontaktstelle zwischen den beiden piezoelektrischen Aktor 23a, 23b dafür gesorgt ist, dass der Stößel 21 immer durch den sich jeweils ausdehnenden piezoelektrischen Aktor 23a, 23b in die gewünschte Richtung geschoben wird.

Es ist in diesem Zusammenhang zu erwähnen, dass eine "Öffnung" und ein "Verschlie-ßen" der Düse im Rahmen der Erfindung anders zu verstehen ist als bei nicht-offenen Systemen des Standes der Technik. Dies hängt damit zusammen, dass die Öffnungswirkung in diesem Ausführungsbeispiel des erfindungsgemäßen Dosiersystems 3 eher als eine Ausstoßwirkung bezeichnet werden kann, als eine reine Öffnungswirkung. Diese Ausstoßwirkung entsteht dadurch, dass der Stößel 21 in einen oberen Bereich des Dosierstoffs-Sammelhohlraums 17 vordringt und dort einen solchen Überdruck erzeugt, dass der darin gesammelte Dosierstoff durch die Austrittsöffnung 19 herausgepresst wird. Dementsprechend kann die Ausstoßrichtung auch als "Öffnungsrichtung" bezeichnet werden. Bei herkömmlichen Dosiersystemen würde hingegen eine Stößel genau in die entgegengesetzte Richtung öffnend wirken: Er würde eine Austrittsöffnung einer Düse freigeben und dadurch einen Durchfluss durch eine Austrittsöffnung ermöglichen. Die Düse ist dagegen "verschlossen" wenn der Stößel nach dem Ausstoßen wieder in die entgegengesetzte Rückzugsrichtung, z. B. in eine ganz zurückgezogenen Stellung oder eine Ruhestellung (beispielsweise mit beiden Aktoren in einer mittleren Stellung), bewegt wird. In diesem Fall gelangt aufgrund der geringen Öffnung der Düse und der hohen Viskosität des Dosierstoffs unter den jeweils vorgegebenen Druckverhältnissen des Dosierstoffs im Dosiersystem kein Dosierstoff mehr aus der Düse. Insofern kann die Rückzugsrichtung auch als eine "Verschlussrichtung" angesehen werden.

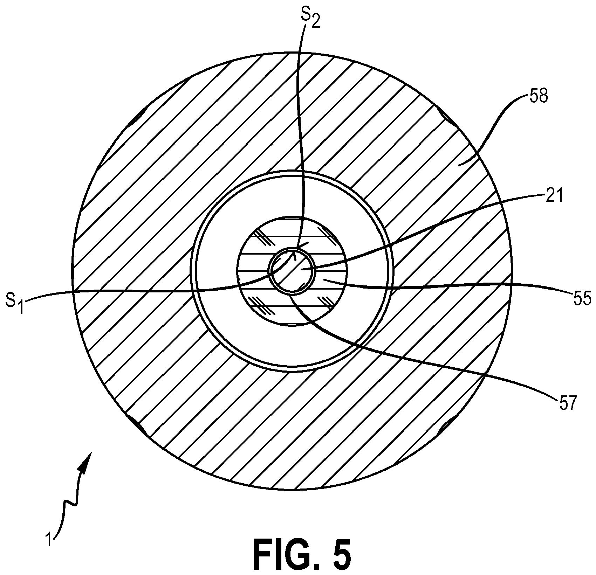

Die besondere Ausstoß- oder Öffnungs- bzw. Verschlusswirkung des Dosiersystems 3 bzw. der Düse 1 wird im Folgenden unter Bezugnahme auf Figur 5 näher ausgeführt, die eine Detailansicht eines Bereichs Y aus Figur 4 ist, die wiederumeine Schnittdarstellung der Düse 1 des Dosiersystems 3 entlang einer Schnittlinie B - B aus Figur 1 zeigt. Es ist zu erkennen, dass innerhalb einer ringförmig ausgebildeten Haltevorrichtung 58 der Düse 1 der Verschlusskanal 55 mittig angeordnet ist. Sein Mittelpunkt liegt genau auf der Achse X (vgl. Fig. 2). Im Verschlusskanal 55 befindet sich der Stößel 21. In diesem Querschnitt und (wie gemäß der Erfindung bevorzugt) in allen Querschnitten entlang der Längsrichtung des Verschlusskanals 55 liegt zwischen dem Stößel 21 und dem Verschlusskanal 55 ein umlaufender, ringförmiger Durchlassspalt 57 (der bevorzugt auch immer entlang der Querschnitte dieselbe Fläche aufweist). Der Durchlassspalt 57 weist eine Spaltbreite zwischen der Außenoberfläche S₁ des Stößels 21 und der Innenoberfläche S₂ des Verschlusskanals 55 von 0,1 mm auf. Durch diesen Durchlassspalt 57 kann der Dosierstoff theoretisch bei entsprechenden Druckverhältnissen aus der Dosierstoffvorratskammer 7 hindurch in Richtung der Austrittsöffnung 19 der Düse 1 fließen, sofern seine Viskosität gering genug ist.

Da es sich bei dem Dosierstoff jedoch um ein scherverdünnendes oder ein thixotropes Gemisch mit einer hohen Viskosität handelt, ist der Abstand zwischen den beiden Oberflächen S₁, S₂ mit 0,1 mm so gewählt, dass seine Viskosität im Ruhezustand so groß ist, dass der Dosierstoff im Durchlassspalt 57 gehalten wird. Dies gilt also für einen Ruhezustand des Stößels 21, in dem dadurch keine Fließbewegung durch den Durchlassspalt 57 zugelassen wird. Wenn der Stößel 21 in eine Bewegung mit einem geeigneten Bewegungsmuster versetzt wird, kann die Viskosität des Dosierstoffs so weit reduziert werden, dass ein relativ leichter Durchfluss durch den Durchlassspalt 57 ermöglicht wird. Dies hat den Effekt, dass der Dosierstoff praktisch frei von der Zuführung 15 in Richtung des Dosierstoff-Sammelhohlraums 17 fließen kann. Dort sammelt er sich und kann dann durch eine gezielte Ausstoßbewegung des Stößels 21 ausgestoßen werden.

Jeder der beiden piezoelektrischen Aktoren 23a, 23b hat einen Hub von 0,069 mm. Um die Viskosität des Dosierstoffs überwinden zu können, ist nur ein geringerer Hub als diese 0,069 Millimeter notwendig. Es reicht im Endeffekt bei vielen Dosierstoffen ein leichtes Oszillieren des Stößels 21, um die Scherkräfte innerhalb des Dosierstoffs so zu überwinden, dass ein Durchfluss durch den Durchlassspalt 57 ermöglicht wird.

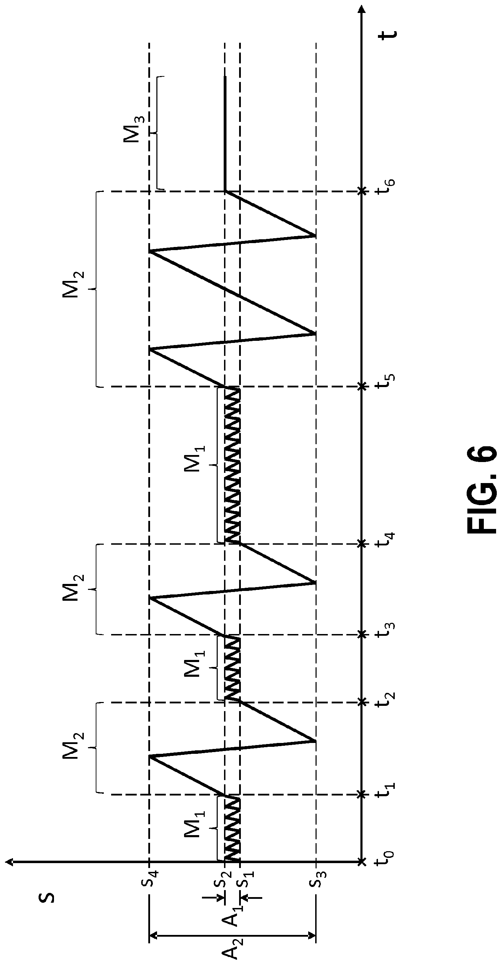

Figur 6 zeigt in diesem Zusammenhang eine mögliche schematische Bewegungskurve des Stößels 21. Über die Zeit t (nicht skaliert) ist der Weg s (nicht skaliert) des Stößels 21 aufgetragen. Es ist zu erkennen, dass der Stößel 21 drei unterschiedliche Bewegungsmodi M₁, M₂, M₃ durchführt.

Ein erster Bewegungsmodus M₁ wird zwischen einem Null-Zeitpunkt t₀ und einem ersten Zeitpunkt t₁, zwischen einem zweiten Zeitpunkt t₂ und einem dritten Zeitpunkt t₃ und zwischen einem vierten Zeitpunkt t₄ und einem fünften Zeitpunkt t₅ durchgeführt. Dieser Bewegungsmodus M₁ besteht in einer geringfügigen relativ schnellen Oszillationsbewegung zwischen zwei Positionen s₁, s₂. Die Bewegung des Stößels 21 hat hier also nur eine geringe Amplitude A₁ bzw. einen geringen Hub A₁, und weist einen gleichförmigen Rhythmus mit einer verhältnismäßig hohen Frequenz auf. Diese Bewegung dient ausschließlich dem Flüssighalten des Dosierstoffs, wobei er jedoch nicht so stark verflüssigt wird, dass permanent Dosierstoff aus der Düse 1 gelangt. Der erste Bewegungsmodus M₁ kann daher auch als Flüssighaltemodus charakterisiert werden.

Der zweite Bewegungsmodus M₂, der zwischen dem ersten Zeitpunkt t₁ und dem zweiten Zeitpunkt t₂, zwischen dem dritten Zeitpunkt t₃ und dem vierten Zeitpunkt t₄ sowie zwischen dem fünften Zeitpunkt t₅ und einem sechsten Zeitpunkt t₆ durchgeführt wird, weist hingegen ein andersartiges Bewegungsmuster auf. Er dient dem Ausstoß des Dosierstoffs aus dem Dosierstoff-Sammelhohlraum 17 und kann daher als Ausstoßmodus bezeichnet werden. Er hat daher eine größere Amplitude A₂ bzw. einen größeren Hub A₂. Seine Frequenz, die insbesondere bei der doppelten Ausstoßbewegung zwischen dem fünften Zeitpunkten t₅ und dem sechsten Zeitpunkt t₆ erkennbar ist, ist deutlich geringer als die der Bewegung im ersten Bewegungsmodus M₁. Der Rhythmus dieser Bewegung kann auch als gleichförmig bezeichnet werden. Der dritte Bewegungsmodus M₃, der nach dem sechsten Zeitpunkt t₆ durchgeführt wird, besteht aus einem einfachen Stillstand des Stößels 21 und bewirkt, dass der Dosierstoff im Durchlassspalt 57 zunächst aufgrund seiner inneren Reibung abgebremst und dann gehalten wird, da seine Viskosität nicht mehr durch die Bewegung des Stößels 21 reduziert wird.

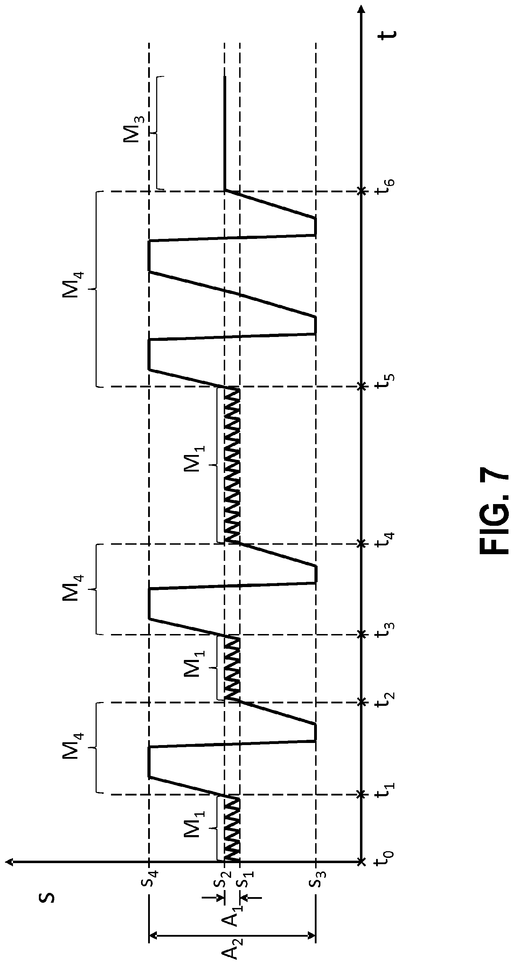

Die Bewegungskurve gemäß Figur 7 unterscheidet sich von der Bewegungskurve gemäß Figur 6 lediglich durch den Ausstoßmodus M₄. Anstelle einer einfachen sägezahnförmigen Auf- und Abbewegung wie beim zweiten Bewegungsmodus M₂ gemäß Figur 6, hält der Stößel 21 nun jeweils in der oberen Position s₄ eine bestimmte Zeitspanne lang an. In dieser Zeit kann Dosierstoff vor den Stößel 21 nachströmen. Dann erfolgt eine sehr schnelle Bewegung des Stößels 21 in Ausstoßrichtung E. In der maximalen Position s₃ in Ausstoßrichtung wird dann der Stößel 21 wieder eine Zeit lang festgehalten. In dieser Zeit wird die Bewegung des Dosierstoffs etwas abgestoppt, um ein Nachtropfen des Dosierstoffs bei der anschließenden Bewegung des Stößels 21 in der Rückzugsrichtung zu vermeiden.

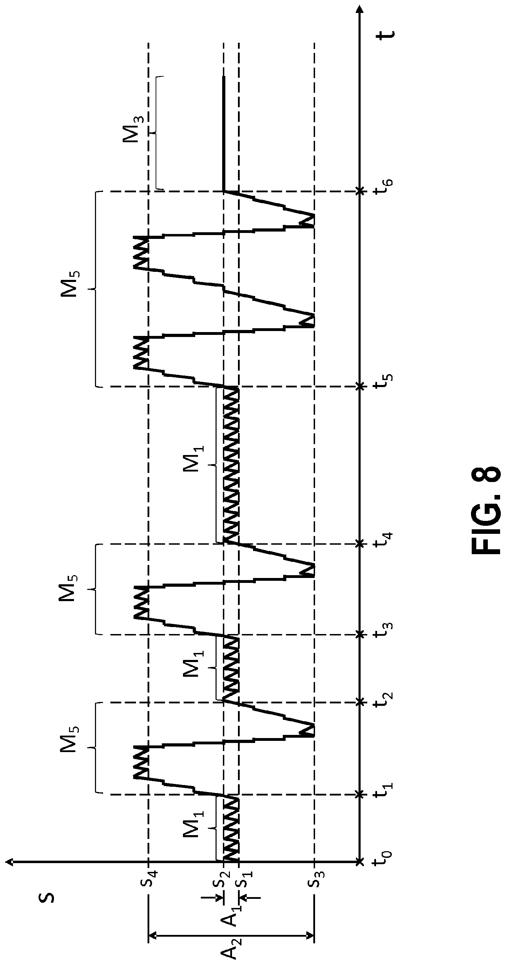

Die Bewegungskurve gemäß Figur 8 unterscheidet sich von der Bewegungskurve gemäß Figur 7 lediglich auch wiederum nur durch den Ausstoßmodus M₅. Hierbei wird dem Bewegungsmuster während der Ausstoßbewegung gemäß dem Bewegungsmodus M₄ nach Figur 7 einfach das Bewegungsmuster im ersten Bewegungsmodus M₁, das heißt die Zitterbewegung des Stößels 21, überlagert. Dies ist sinnvoll, wenn es sich um einen Dosierstoff handelt, der relativ schnell seine Viskosität wieder erhöht, wenn die hochfeine Zitterbewegung aufhört. Durch die Überlagerung der Bewegungsmuster kann dafür gesorgt werden, dass permanent die Viskosität des Dosierstoffs verringert wird.

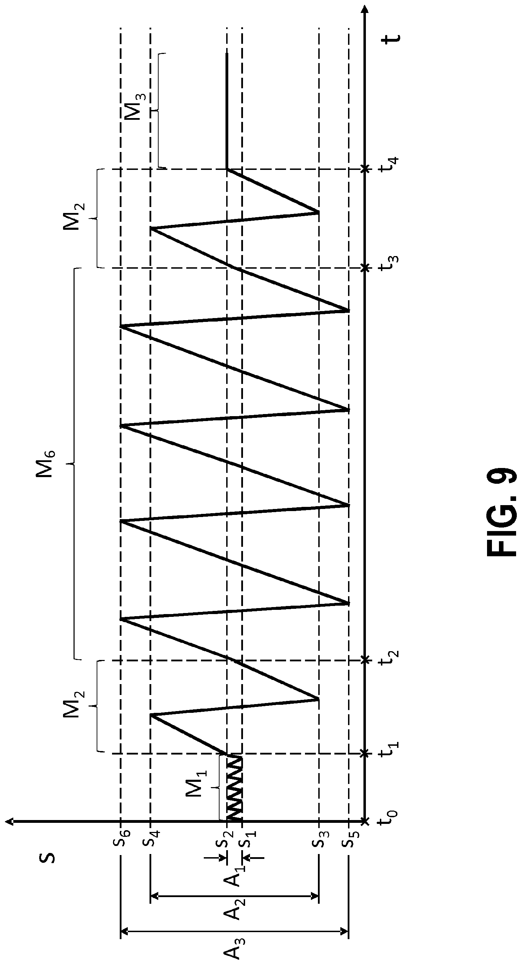

Figur 9 zeigt schließlich eine Bewegungskurve, welche beispielsweise dazu geeignet ist, durch enges Nebeneinandersetzen von einzelnen Punkten von Dosierstoff eine "Raupe", d. h. einen durchgehenden Streifen, mit gleichmäßiger Dicke zu ziehen. Je nach Dosierstoff kann es passieren, dass sowohl der erste Tropfen als auch der letzte Tropfen größer sind als die dazwischen dosierten Tropfen, auch wenn für jeden Tropfen die gleiche Hubhöhe des Stößels 21 gewählt wird. In diesem Fall ist es sinnvoll, unterschiedliche Ausstoßmodi M₂, M₆ vorzusehen, die sich lediglich in ihren Hubhöhen voneinander unterscheiden. Beispielsweise kann für den ersten und für den letzten Tropfen jeweils ein Bewegungsmodus M₂ mit einer geringeren Hub höher gewählt werden, als für die dazwischen dosierten Tropfen.

Die Beispiele zeigen deutlich, dass es mit der Erfindung idealerweise möglich ist, die genauen Parameter der einzelnen Bewegungsmodi und die Abfolge der Bewegungsmodi exakt an den jeweils zu verarbeitenden Dosierstoff und die Dosieraufgabe anzupassen. Es wird abschließend noch einmal darauf hingewiesen, dass es sich bei den vorhergehend detailliert beschriebenen Komponenten des Dosiersystems bzw. der Düse und des Aktorsystems lediglich um Ausführungsbeispiele handelt, welche vom Fachmann in verschiedenster Weise modifiziert und deren Merkmale neu kombiniert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Außerdem können "Einheiten" aus einer oder mehreren, auch räumlich verteilt angeordneten, Komponenten bestehen.

### Bezugszeichenliste:

- 1: Düse
- 3: Dosiersystem
- 5: Dosierstoffbehälter
- 7: Dosierstoffvorratskammer
- 9: Befestigungsschraube
- 11: Verbindungspfropfen
- 13: Leitung
- 15: Zuführung
- 17: Dosierstoff-Sammelhohlraum
- 19: Austrittsöffnung
- 21: Verschlusselement - Stößel
- 23a: erster piezoelektrischer Aktor
- 23b: zweiter piezoelektrischer Aktor
- 25: Aktorenkammer
- 27: Abstandhalter
- 29: Abstandhalter-Stellschraube
- 31: Kontaktanschluss
- 33: Kontaktanschluss
- 35: Gehäuse
- 37: erster Gehäuseteil
- 39: zweiter Gehäuseteil
- 41: Halteschrauben
- 43: Federn
- 45: Dichtung - Ringdichtung
- 47: Führungselement
- 49: Verbindungselement
- 51: Verbindungselement
- 52: Hohlraum
- 53: Spalt
- 55: Verschlusskanal
- 58: Haltevorrichtung
- 59: Aktorbereich
- 61: Aktorsystem
- 63: elektronische Steuerungseinheit

- A₁, A₂: Amplitude - Hub
- E: Ausstoßrichtung
- M₁: Bewegungsmodus - Flüssighaltemodus
- M₂: Bewegungsmodus - Ausstoßmodus
- M₃: Bewegungsmodus - Stillstand
- M₄: Bewegungsmodus - Ausstoßmodus
- M₅: Bewegungsmodus - Ausstoßmodus
- M₆: Bewegungsmodus - Ausstoßmodus
- R: Rückzugsrichtung
- s: Weg
- S₁: Außenoberfläche
- s₁, s₂, s₃, s₄: Positionen
- S₂: Innenoberfläche
- SS₁: erste Steuersignale
- SS₂: zweite Steuersignale
- t: Zeit
- t₀, t₁, t₂, t₃, t₄, t₅, t₆: Zeitpunkte
- WR: Wirkrichtungsachse
- X: (Mittel-)Achse
- Y: Bereich

## Patentansprüche

1. Dosiersystem (3) für einen Dosierstoff mit einer Düse (1), die eine Austrittsöffnung (19) aufweist, in deren Bereich ein Verschlusselement (21) bewegbar angeordnet ist, das im Betrieb in einer Ausstoß- (E) oder Rückzugsrichtung (R) bewegt wird, wobei das Verschlusselement (21) so mit zumindest zwei piezoelektrischen Aktoren (23a, 23b) gekoppelt ist, die gegenläufig geschaltet sind, dass ein erster piezoelektrischer Aktor (23a), wenn er im Betrieb expandiert wird, das Verschlusselement (21) in die Rückzugsrichtung (R) bewegt und ein zweiter piezoelektrischer Aktor (23b), wenn er im Betrieb expandiert wird, das Verschlusselement (21) zum Ausstoß von Dosierstoff aus der Düse (1) in die Ausstoßrichtung (E) bewegt, **dadurch gekennzeichnet, dass**, im Betrieb, der erste piezoelektrische Aktor (23a) durch seine Abmessungsänderung die Abmessungsänderung des zweiten piezoelektrischen Aktors (23b) ausgleicht und der zweite piezoelektrische Aktor (23b) durch seine Abmessungsänderung die Abmessungsänderung des ersten piezoelektrischen Aktors (23a) ausgleicht.

2. Dosiersystem gemäß Anspruch 1, bei dem der erste piezoelektrische Aktor (23a) und der zweite piezoelektrische Aktor (23b) so angeordnet und ausgebildet sind, dass die Ausstoßrichtung (E) und die Rückzugsrichtung (R) des Verschlusselements (21) im Wesentlichen entlang einer Wirkrichtungsachse (WR) der piezoelektrischen Aktoren (23a, 23b) liegen, wobei vorzugsweise die Wirkrichtungsachsen der beiden piezoelektrischen Aktoren (23a, 23b) zu einer Wirkrichtungsachse (WR) zusammen fallen.

3. Dosiersystem gemäß Anspruch 1 oder 2, wobei das Verschlusselement (21) an einer Kontaktposition zwischen dem ersten piezoelektrischen Aktor (23a) und dem zweiten piezoelektrischen Aktor (23b) mit dem ersten piezoelektrischen Aktor (23a) und mit dem zweiten piezoelektrischen Aktor (23b) gekoppelt ist.

4. Dosiersystem gemäß einem der vorhergehenden Ansprüche, wobei mindestens einer der piezoelektrischen Aktoren (23a, 23b) zylinderförmig ausgebildet ist.

5. Dosiersystem gemäß Anspruch 4, wobei das Verschlusselement (21) zumindest teilweise in einem durch eine Form mindestens eines der piezoelektrischen Aktoren (23a, 23b) gebildeten Hohlraum (52) angeordnet ist oder von einer Gruppe von mehreren, vorzugsweise mindestens drei, parallel angeordneten und parallel wirkenden piezoelektrischen Aktorelementen eines piezoelektrischen Aktors (23a, 23b) umgeben ist.

6. Dosiersystem gemäß Anspruch 5, wobei das Verschlusselement (21) fest mit dem ersten piezoelektischen Aktor (23a) verbunden ist.

7. Dosiersystem gemäß einem der vorhergehenden Ansprüche, wobei der erste piezoelektrische Aktor (23a) und der zweite piezoelektrische Aktor (23b) in einer gemeinsamen Aktorenkammer (25) angeordnet sind.

8. Dosiersystem gemäß Anspruch 7, wobei der erste piezoelektrische Aktor (23a) und der zweite piezoelektrische Aktor (23b) in ihren im Betrieb gemeinsam durchgeführten Abmessungsänderungen innerhalb der Aktorenkammer (25) auf ein definiertes maximales Gesamtmaß begrenzt sind.

9. Dosiersystem gemäß einem der vorhergehenden Ansprüche, umfassend einen ersten Gehäuseteil (37), der die Düse (1) umfasst, und einen zweiten Gehäuseteil (39), der mindestens einen der beiden piezoelektrischen Aktoren (23a, 23b) fixiert.

10. Dosiersystem gemäß Anspruch 9, wobei der erste Gehäuseteil (37) und der zweite Gehäuseteil (39) miteinander über Federn (43) elastisch verbunden sind.

11. Dosiersystem gemäß einem der vorhergehenden Ansprüche, umfassend eine vom ersten piezoelektrischen Aktor (23a) und/oder vom zweiten piezoelektrischen Aktor (23b) separierte Dosierstoffvorratskammer (7), die über eine Leitung (13) in Richtung der Austrittsöffnung (19) mit der Düse (1) verbunden ist.

12. Dosiersystem gemäß einem der vorhergehenden Ansprüche, mit einer elektronischen Steuerungseinheit (63) zur Steuerung des ersten piezoelektrischen Aktors (23a) und/oder des zweiten piezoelektrischen Aktors (23b) und/oder eines Drucks in einer Dosierstoffvorratskammer (7) des Dosiersystems.

13. Dosierverfahren für einen Dosierstoff mittels eines Dosiersystems (3) gemäß einem der vorgehenden Ansprüche.

14. Herstellungsverfahren für ein Dosiersystem (3) für einen Dosierstoff gemäß einem der Ansprüche 1-12, mit mindestens folgenden Schritten:
- Bereitstellung einer Düse (1), die eine Austrittsöffnung (19) aufweist,
- bewegbare Anordnung eines Verschlusselements (21) im Bereich der Düse (1),
- Kopplung des Verschlusselements (21) mit zumindest zwei piezoelektrischen Aktoren (23a, 23b), wobei die piezoelektrischen Aktoren (23a, 23b) so angeordnet und mit dem Verschlusselements (21) gekoppelt und gegenläufig geschaltet werden, dass ein erster piezoelektrischer Aktor (23a), wenn er im Betrieb expandiert wird, das Verschlusselement (21) in die Rückzugsrichtung (R) bewegt und ein zweiter piezoelektrischer Aktor (23b), wenn er im Betrieb expandiert wird, das Verschlusselement (21) in die Ausstoßrichtung (E) bewegt, wobei, im Betrieb, der erste piezoelektrische Aktor (23a) durch seine Abmessungsänderung die Abmessungsänderung des zweiten piezoelektrischen Aktors (23b) ausgleicht und der zweite piezoelektrische Aktor (23b) durch seine Abmessungsänderung die Abmessungsänderung des ersten piezoelektrischen Aktors (23a) ausgleicht.

## Claims

1. Dosing system (3) for a dosing material comprising a nozzle (1), with an outlet opening (19), in the region of which a closure element (21) is movably arranged, which is moved during operation in an ejection direction (E) and/or a retraction direction (R), wherein the closure element (21) is coupled to at least two piezoelectric actuators (23a, 23b) connected in opposite directions such that a first piezoelectric actuator (23a), when it is expanded in operation, moves the closure element (21) in the retraction direction (R), and a second piezoelectric actuator (23b), when it is expanded in operation, moves the closure element (21) in the ejection direction (E) to eject dosing material from the nozzle (1), **characterized in that**, during operation, the first piezoelectric actuator (23a) compensates the dimensional change of the second piezoelectric actuator (23b) with its dimensional change, and the second piezoelectric actuator (23b) compensates the dimensional change of the first piezoelectric actuator (23a) with its dimensional change.

2. Dosing system according to claim 1, wherein the first piezoelectric actuator (23a) and the second piezoelectric actuator (23b) are arranged and realized such that the ejection direction (E) and the retraction direction (R) of the closure element (21) lie essentially along an effective direction axis (WR) of the piezoelectric actuators (23a, 23b), wherein the effective direction axes of the two piezoelectric actuators (23a, 23b) preferably coincide in a single effective direction axis (WR).

3. Dosing system according to claim 1 or claim 2, wherein the closure element (21) is coupled to the first piezoelectric actuator (23a) and the second piezoelectric actuator (23b) at a junction between the first piezoelectric actuator (23a) and the second piezoelectric actuator (23b).

4. Dosing system according to any of the preceding claims, wherein at least one of the piezoelectric actuators (23a, 23b) comprises a cylindrical form.

5. Dosing system according to claim 4, wherein the closure element (21) is at least partially arranged in a cavity (52) defined by the shape of at least one of the piezoelectric actuators (23a, 23b), or is surrounded by a group of several, preferably at least three, piezoelectric actuator elements of a piezoelectric actuator (23a, 23b) arranged in parallel and acting in parallel.

6. Dosing system according to claim 5, wherein the closure element (21) is secured to the first piezoelectric actuator (23a).

7. Dosing system according to any of the preceding claims, wherein the first piezoelectric actuator (23a) and the second piezoelectric actuator (23b) are arranged in a common actuator chamber (25).

8. Dosing system according to claim 7, wherein the first piezoelectric actuator (23a) and the second piezoelectric actuator (23b) are limited during operation to a defined maximum overall dimension in their combined dimensional changes within the actuator chamber.

9. Dosing system according to any of the preceding claims, comprising a first housing part (37) that encloses the nozzle (1), and a second housing part (39) that secures at least one of the two piezoelectric actuators (23a, 23b).

10. Dosing system according to claim 9, wherein the first housing part (37) and the second housing part (39) are flexibly connected by means of springs (43).

11. Dosing system according to any of the preceding claims, comprising a dosing material reservoir (7) separated from the first piezoelectric actuator (23a) and/or from the second piezoelectric actuator (23b), and connected to the nozzle (1) by means of a supply line (13) in the direction of the outlet opening (19).

12. Dosing system according to any of the preceding claims, with an electronic control unit (63) for controlling the first piezoelectric actuator (23a) and/or the second piezoelectric actuator (23b) and/or a pressure in a dosing material reservoir (7) of the dosing system.

13. Dosing method for a dosing material by means of a dosing system (3) according to any of the preceding claims.

14. Manufacturing method for a dosing system (3) for a dosing material according to any of claims 1-12, comprising at least the following steps:
- providing a nozzle (1), which comprises an outlet opening (19),
- moveably arranging a closure element (21) in the region of the nozzle (1),
- coupling of the closure element (21) with at least two piezoelectric actuators (23a, 23b), wherein the piezoelectric actuators (23a, 23b) are arranged and coupled with the closure element (21) and connected in opposite directions such that a first piezoelectric actuator (23a), when it is expanded in operation, moves the closure element (21) in the retraction direction (R), and a second piezoelectric actuator (23b), when it is expanded in operation, moves the closure element (21) in the ejection direction (E), wherein, in operation, the first piezoelectric actuator (23a) compensates the dimensional change of the second piezoelectric actuator (23b) with its dimensional change, and the second piezoelectric actuator (23b) compensates the dimensional change of the first piezoelectric actuator (23a) with its dimensional change.

## Revendications

1. Système de dosage (3) d'une substance à doser, pourvu d'une buse (1), qui comporte un orifice de sortie (19) dans la zone duquel un élément de fermeture (21) qui en cours de fonctionnement est déplacé dans une direction d'éjection (E) ou de rétraction (R) est placé de manière mobile, l'élément de fermeture (21) étant accouplé avec au moins deux actionneurs piézoélectriques (23a, 23b) qui sont montés à contresens, de telle sorte que lorsqu'il subit une expansion en service, un premier actionneur piézoélectrique (23a) déplace l'élément de fermeture (21) dans la direction de rétraction (R) et lorsqu'il subit une expansion en service, pour l'éjection de la substance à doser hors de la buse (1), un deuxième actionneur piézoélectrique (23b) déplace l'élément de fermeture (21) dans la direction d'éjection (E), **caractérisé en ce qu'**en cours de fonctionnement, par sa variation dimensionnelle, le premier actionneur piézoélectrique (23a) compense la variation dimensionnelle du deuxième actionneur piézoélectrique (23b) et **en ce que** par sa variation dimensionnelle, le deuxième actionneur piézoélectrique (23b) compense la variation dimensionnelle du premier actionneur piézoélectrique (23a).

2. Système de dosage selon la revendication 1, sur lequel le premier actionneur piézoélectrique (23a) et le deuxième actionneur piézoélectrique (23b) sont placés et conçus de telle sorte que la direction d'éjection (E) et la direction de rétraction (R) de l'élément de fermeture (21) se situent sensiblement le long d'un axe de direction d'action (WR) des actionneurs piézoélectriques (23a, 23b), de préférence les axes de direction d'action des deux actionneurs piézoélectriques (23a, 23b) coïncidant en un axe de direction d'action (WR).

3. Système de dosage selon la revendication 1 ou 2, sur une position de contact entre le premier actionneur piézoélectrique (23a) et le deuxième actionneur piézoélectrique (23b), l'élément de fermeture (21) étant accouplé avec le premier actionneur piézoélectrique (23a) et avec le deuxième actionneur piézoélectrique (23b).

4. Système de dosage selon l'une quelconque des revendications précédentes, au moins l'un des actionneurs piézoélectriques (23a, 23b) étant conçu de forme cylindrique.

5. Système de dosage selon la revendication 4, l'élément de fermeture (21) étant placé au moins en partie dans une cavité (52) créée par une forme d'au moins l'un des actionneurs piézoélectriques (23a, 23b) ou étant entouré par un groupe de plusieurs, de préférence d'au moins trois éléments d'actionneur piézoélectrique placés à la parallèle et agissant en parallèle d'un actionneur piézoélectrique (23a, 23b).

6. Système de dosage selon la revendication 5, l'élément de fermeture (21) étant fixement assemblé avec le premier actionneur piézoélectrique (23a).

7. Système de dosage selon l'une quelconque des revendications précédentes, le premier actionneur piézoélectrique (23a) et le deuxième actionneur piézoélectrique (23b) étant placés dans une chambre d'actionneur (25) commune.

8. Système de dosage selon la revendication 7, lors de leurs variations dimensionnelles réalisées en commun en cours de fonctionnement, le premier actionneur piézoélectrique (23a) et le deuxième actionneur piézoélectrique (23b) étant limités à l'intérieur de la chambre d'actionneur (25) à une dimension totale maximale définie.

9. Système de dosage selon l'une quelconque des revendications précédentes, comprenant une première partie de boîtier (37), qui comprend la buse (1) et une deuxième partie de boîtier (39), qui fixe au moins l'un des deux actionneurs piézoélectriques (23a, 23b).

10. Système de dosage selon la revendication 9, la première partie de boîtier (37) et la deuxième partie de boîtier (39) étant élastiquement assemblées l'une à l'autre par l'intermédiaire de ressorts (43).

11. Système de dosage selon l'une quelconque des revendications précédentes, comprenant une chambre de réserve de substance à doser (7) séparée du premier actionneur piézoélectrique (23a) et/ou du deuxième actionneur piézoélectrique (23b), qui par l'intermédiaire d'un conduit (13) est assemblée dans la direction de l'orifice de sortie (19) avec la buse (1).

12. Système de dosage selon l'une quelconque des revendications précédentes, pourvu d'une unité de commande électronique (63), destinée à commander le premier actionneur piézoélectrique (23a) et/ou le deuxième actionneur piézoélectrique (23b) et/ou une pression dans une chambre de réserve de substance à doser (7) du système de dosage.

13. Procédé de dosage d'une substance à doser au moyen d'un système de dosage (3) selon l'une quelconque des revendications précédentes.

14. Procédé de fabrication d'un système de dosage (3) d'une substance à doser selon l'une quelconque des revendications 1 à 12, comportant au moins les étapes suivantes:
- mettre à disposition une buse (1), qui comporte un orifice de sortie (19),
- placer de manière mobile un élément de fermeture (21) dans la zone de la buse (1),
- accoupler l'élément de fermeture (21) avec au moins deux actionneurs piézoélectriques (23a, 23b), les actionneurs piézoélectriques (23a, 23b) étant placés et accouplés et montés à contresens avec l'élément de fermeture (21) de telle sorte que lorsqu'il subit une expansion en service, un premier actionneur piézoélectrique (23a) déplace l'élément de fermeture (21) dans la direction de rétraction (R) et lorsqu'il subit une expansion en service; un deuxième actionneur piézoélectrique (23b) déplace l'élément de fermeture (21) dans la direction d'éjection (E), en cours de fonctionnement, par sa variation dimensionnelle, le premier actionneur piézoélectrique (23a) compensant la variation dimensionnelle du deuxième actionneur piézoélectrique (23b) et par sa variation dimensionnelle, l'actionneur piézoélectrique (23b) compensant la variation dimensionnelle du premier actionneur piézoélectrique (23a).
